(19) Europäisches Patentamt
European Patent Office
Office européen des brevets

(11) **EP 4 342 959 A1**

(12) **EUROPEAN PATENT APPLICATION**
published in accordance with Art. 153(4) EPC

(43) Date of publication:
**27.03.2024   Bulletin 2024/13**

(21) Application number: **22828530.0**

(22) Date of filing: **24.06.2022**

(51) International Patent Classification (IPC):
*C09K 5/14* (2006.01)          *C04B 35/117* (2006.01)
*F28D 20/00* (2006.01)

(52) Cooperative Patent Classification (CPC):
**C04B 35/117; C09K 5/14; F28D 20/00;** Y02E 60/14

(86) International application number:
**PCT/JP2022/025244**

(87) International publication number:
**WO 2022/270614 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021   JP 2021105087**

(71) Applicants:
• **Chubu Electric Power Miraiz Co.,Inc.**
**Nagoya-shi, Aichi, 461-8680 (JP)**
• **CHUBU ELECTRIC POWER CO., INC.**
**Higashi-ku**
**Nagoya-shi, Aichi 461-8680 (JP)**

• **National University Corporation Tokai National
Higher Education and Research System
Nagoya-shi, Aichi 464-8601 (JP)**

(72) Inventors:
• **TAKEUCHI, Akihiro**
**Nagoya-shi, Aichi 461-8680 (JP)**
• **KITA, Hideki**
**Nagoya-shi, Aichi 464-8601 (JP)**
• **YAMASHITA, Seiji**
**Nagoya-shi, Aichi 464-8601 (JP)**

(74) Representative: **Prüfer & Partner mbB**
**Patentanwälte · Rechtsanwälte**
**Sohnckestraße 12**
**81479 München (DE)**

(54) **CERAMIC HEAT STORAGE UNIT, METHOD FOR PRODUCING CERAMIC HEAT STORAGE UNIT, AND METHOD FOR ESTIMATING COMPOSITION OF CERAMIC HEAT STORAGE UNIT**

(57)     [Problem]
Provided is a ceramic heat storage body that is high in thermal efficiency even in a thermally non-equilibrium state, such as in a regenerative heat storage burner system, high in maintainability because it is difficult for contaminants to adhere to and difficult to break owing to excellent abrasion resistance, and easily manufacturable at a low price, and a method for manufacturing the ceramic heat storage body.
    [Solution]
A ceramic heat storage body 10 includes a shell 11 that contains alumina as a main component and has an average absorbance larger than 0.3 at 1.7 μm to 2.7 μm, which is a center wavelength of radiant heat at 800°C to 1400°C. In addition to alumina, the shell 11 contains oxides containing Cr, Fe, Mn, and Co in an amount of 1 weight% or more in compound equivalent. Furthermore, the shell 11 is a shell that has an outer surface in a shape of a spheroid including a sphere and internally has a hollow portion. Moreover, in the shell 11, during heat storage, a center temperature of a hollow portion 12 is higher than an inner surface temperature of the shell 11.

EP 4 342 959 A1

FIG.1

10

11

12

**Description**

TECHNICAL FIELD

The disclosure relates to a ceramic heat storage body, a method for manufacturing a ceramic heat storage body, and a composition estimating method of a ceramic heat storage body.

BACKGROUND ART

Nowadays, various measures are desired for realizing energy saving. For example, a regenerative heat storage burner used in industrial furnaces and the like is a burner that includes heat exchangers in intake and exhaust paths. Since the regenerative heat storage burner can achieve high thermal efficiency by repeating burning and exhausting air alternately at a relatively short cycle to store the heat of combustion gas in heat storage bodies on the exhaust air side of the burner and to preliminary heat air for burning by the heat stored in the heat storage bodies on the burning side of the burner, it is expected to contribute to energy saving. In the past, solid balls of alumina or the like have been used for the heat storage bodies filled in a heat exchanger disposed in the regenerative heat storage burner and the like. However, thermal efficiency of the heat exchanger depends on the performance of the heat storage bodies, and therefore, the development of a heat storage body having higher thermal efficiency has been desired.

Meanwhile, a heat storage body described in Patent Document 1 includes an outer shell and a hollow portion formed inside the outer shell. The outer shell includes protruding portions that protrude toward an outer side of the outer shell and have openings for circulating fluid between the outside of the outer shell and the hollow portion, thereby increasing a surface area usable for heat exchange compared with a solid ball and realizing high heat storage efficiency.

Patent Document 1: JP 2020-70949 A

DISCLOSURE OF THE INVENTION

PROBLEMS TO BE SOLVED BY THE INVENTION

As described above, for use in heat storage and heat exchange of high-temperature gas, such as a regenerative heat storage burner system, which is hereinafter referred to as a regenerative system, the development of a heat storage body with higher thermal efficiency has been desired. Here, the thermal efficiency is a heat amount that can be recovered when heat input and heat radiation are repeated in a thermally non-equilibrium state. That is, it can be defined that (thermal efficiency) is equal to (stored heat amount) minus (remaining heat amount) when heat storage bodies having a substantially identical size in appearance are exposed to a high temperature for a limited period to cause heat release. In a generally used heat storage body as a white alumina solid ball, thermal diffusivity decreases with increasing temperature. Accordingly, even when the application and radiation of heat are repeated in a thermally non-equilibrium state, temperature rise remains only on a surface, and inside of the alumina solid ball cannot be effectively used as a heat storage body.

Further, while many ceramics decrease in thermal diffusivity with increasing temperature, in particular, white alumina becomes further disadvantageous because heat transfer by a radiation effect cannot be expected.

Moreover, in the regenerative system, heat storage bodies are often exposed to dust, various contaminated components, and the like included in exhaust gas in a heat exchanger. Accordingly, when dust, contaminated substances, and the like accumulate on a large amount of heat storage bodies filled in the heat exchanger, a gap between the individual heat storage bodies, that is, a passage of air and waste gas, is obstructed, disabling heat exchange. Therefore, the heat exchanger in which the heat storage bodies are filled undergoes maintenance for cleaning attached substances on the surfaces of the heat storage bodies after a certain period of use, for example, by removing the filled large amount of heat storage bodies and scrubbing them one another. It can be easily imagined that the maintenance requires considerable work and time, and for improving maintainability, heat storage bodies that is difficult for contaminants to adhere on surfaces are desired. Furthermore, when the heat storage bodies are scrubbed one another in cleaning, the heat storage bodies themselves are damaged and worn by abrasion, and therefore, heat storage bodies having excellent abrasion resistance are necessary.

Since in the heat storage body described in Patent Document 1, fluid can circulate through the internally formed hollow portion, not only the surfaces but also inner surfaces can be used as a heat transfer area, and the heat storage body can be said to be advantageous for heat exchange in a short period. On the other hand, since a thermal capacity decreases as a whole, a decrease in the overall thermal capacity is a disadvantage. Moreover, the heat storage body described in Patent Document 1 has a complicated shape having protruding portions, and compared with a spherical shape, the heat storage body is low in maintainability and easily damaged.

Furthermore, recently, heat storage bodies of non-oxide-based ceramics, such as silicon carbide, having excellent thermal conductivity, have also been put to practical use. However, compared with oxide-based ceramics, such as alumina, the heat storage bodies of non-oxide-based ceramics are generally expensive and have remaining problems, such as that oxidation progresses when they are used for a long period in a high-temperature air, deteriorating the property. Therefore, little is known about application to a ceramic heat storage body.

Therefore, it is an object of the disclosure to provide a ceramic heat storage body, a method for manufacturing the ceramic heat storage body, and a composition estimating method of a ceramic heat storage body, which can contribute to the manufacturing method. The ceramic heat storage body is high in thermal efficiency even in a thermally non-equilibrium state, such as in a regenerative system, high in maintainability for the reasons that it is difficult for contaminants to adhere to and has high strength and excellent abrasion resistance, and easily manufacturable at a low price.

SOLUTIONS TO THE PROBLEMS

In order to achieve the above-described object, the invention according to claim 1 provides a ceramic heat storage body including alumina as a main component and having an average absorbance larger than 0.3 at 1.7 μm to 2.7 μm as a center wavelength of radiant heat at 800°C to 1400°C.

The invention according to claim 2, which is in the above-described configuration, includes a compound other than alumina in an amount of 1 weight% or more in compound equivalent.

In the invention according to claim 3, which is in the above-described configuration, the compound contains at least one of Cr, Fe, Mn, Co, Ti, Ca, Zr, Hf, and Ta.

In the invention according to claim 4, which is in the above-described configuration, the compound is any one of a carbide, an oxide, and a nitride, or a mixture thereof.

In the invention according to claim 5, which is in the above-described configuration, the ceramic heat storage body has a shell, and the shell has an outer surface in a shape of a spheroid including a sphere and internally has a hollow portion.

In the invention according to claim 6, which is in the above-described configuration, when an average outer diameter of the shell is denoted by D and an average diameter of the hollow portion is denoted by $d$, $d$ is smaller than (D - 8) mm.

In the invention according to claim 7, which is in the above-described configuration, the ceramic heat storage body has a solid body. The solid body has an outer surface in a shape of a spheroid including a sphere and an average outer diameter of 13 mm or less.

In the invention according to claim 8, which is in the above-described configuration, a center temperature of the hollow portion is higher than an inner surface temperature of the shell during heat storage.

In the invention according to claim 9, which is in the above-described configuration, the compound contains $Co_3O_4$, $Fe_3O_4$, and $MnO_2$, the $Co_3O_4$ is contained in an amount of 2 weight% or more and 6 weight% or less, the $Fe_3O_4$ is contained in an amount of 2 weight% or more and 6 weight% or less, and the $MnO_2$ is contained in an amount of 2 weight%.

The invention according to claim 10 provides a manufacturing method of a ceramic heat storage body. The manufacturing method includes: an injecting step of injecting slurry containing ceramic powder and a dispersion medium into a forming mold having an outer surface shape of a shell without having an opening; a forming step of obtaining a formed body including the shell and a hollow portion formed inside the shell by allowing the forming mold to absorb the dispersion medium; a mold release step of releasing the formed body from the forming mold: and a drying step of drying and then firing the released formed body to manufacture a ceramic heat storage body.

In the invention according to claim 11, which is in the above-described configuration, a dimensional variation with respect to an average outer diameter of the shell is within ±1 mm.

The invention according to claim 12 provides a manufacturing method of a ceramic heat storage body, which is in the above-described configuration, for manufacturing a ceramic heat storage body containing alumina as a main component and further containing one or more compounds other than alumina. The manufacturing method includes: a sample data input accepting step of accepting an input in a computer, the input being about a correspondence relationship between a composition and an emissivity, the composition pertaining to at least any one of an amount of the alumina and a type and an amount of the compound, the correspondence relationship being obtained for each of a plurality of samples different from one another in at least any one of the amount of the alumina and the type and the amount of the compound by manufacturing a plurality of the samples and actually measuring the emissivity of each sample; an objective function obtaining step of obtaining a relative emission parameter as an objective function with the composition as a variable from the input plurality of correspondence relationships between the compositions and the emissivities for the samples in the computer by mathematical programming; and a composition estimating step of estimating an estimated value for the composition having the relative emission parameter that exceeds a relative emission parameter of any one of the samples by a computer. The injecting step and subsequent steps are performed with the estimated value estimated for the composition.

The invention according to claim 13 provides a composition estimating method of a ceramic heat storage body, in the ceramic heat storage body containing alumina as a main component and further containing one or more compounds other than alumina. The composition estimating method for estimating a composition pertaining to an amount of the alumina and a type and an amount of the compound includes: a sample data input accepting step of accepting an input in a computer, the input being about a correspondence relationship between the composition and an emissivity, the correspondence relationship being obtained for each of a plurality of samples different from one another in the composition by manufacturing the samples and actually measuring the emissivity of each sample; an objective function obtaining step of obtaining a relative emission parameter as an objective function with the composition as a variable from the input plurality of correspondence relationships between the compositions and the emissivities for the samples in the computer by mathematical programming; and a composition estimating step of estimating an estimated value for the composition having the relative emission parameter that exceeds a relative emission parameter of any one of the samples by the computer.

In the invention according to claim 14, which is in the above-described configuration, the mathematical programming is multiple regression analysis.

Note that in the application, the "main component" means a component contained with a weight at a proportion exceeding 80 weight% with respect to the total weight. The "main component" may mean a component contained with a weight at a proportion of 85 weight% or more with respect to the total weight. Moreover, the "main component" may mean a component contained with a weight at a proportion of 90 weight% or more with respect to the total weight. Furthermore, the "main component" may mean a component contained with a weight at a proportion of 95 weight% or more with respect to the total weight.

In the application, "without having an opening" means that an opening is not actively provided in the shell using a method, such as drilling. That is, micro pores caused by a minute structure of the fired ceramics are excluded. Additionally, the expressions, such as "a shell is closed" indicate a state where the hollow portion is not purposely communicated with an outside of the shell, and in practice, the hollow portion is communicated with the outside of the shell by invisible micro pores in some cases.

EFFECTS OF THE INVENTION

A main effect of the disclosure is to provide a ceramic heat storage body, a method for manufacturing the ceramic heat storage body and a composition estimating method of a ceramic heat storage body, which can contribute to the manufacturing method. The ceramic heat storage body is high in thermal efficiency even in a thermally non-equilibrium state, such as in a regenerative system, high in maintainability because it is difficult for contaminants to adhere to and difficult to break owing to excellent abrasion resistance, and easily manufacturable at a low price.

BRIEF DESCRIPTION OF THE DRAWINGS

Fig. 1 is a cross-sectional view of a ceramic heat storage body of the disclosure.
Fig. 2 is an explanatory view illustrating an exemplary mold for manufacturing the ceramic heat storage body of the disclosure.
Figs. 3(a) and 3(b) are explanatory views illustrating a manufacturing process of the ceramic heat storage body of the disclosure.
Fig. 4 is a flowchart illustrating manufacturing steps of the ceramic heat storage body of the disclosure.
Fig. 5 is a table illustrating physical quantities of Embodiment 1 and Comparative Example 1.
Fig. 6 includes graphs illustrating temperature rise behavior of Embodiment 1 and Comparative Example 1, illustrating Embodiment 1 in Fig. 6(a) and Comparative Example 1 in Fig. 6(b).
Fig. 7 is a graph illustrating changes of a center temperature and a shell inner surface temperature of Embodiment 1.
Fig. 8 is a graph illustrating stored heat amount behavior of Embodiment 1 and Comparative Example 1.
Fig. 9 is a graph illustrating heat storage efficiency behavior of Embodiment 1 and Comparative Example 1.
Fig. 10 is a table illustrating breakdowns of compounds added to Embodiment 2 and Comparative Example 2 and average absorbances.
Fig. 11 includes graphs illustrating a relationship between a shell thickness and a recovered heat amount and between the shell thickness and a stored heat amount in Embodiment 3 and Comparative Example 3, showing a calculation result with models having an average absorbance of 0.3 in Fig. 11(a) and a calculation result with models having an average absorbance of 0.9 in Fig. 11(b).
Fig. 12 is a block diagram of a computer that can implement a composition estimating method and a manufacturing method of a ceramic heat storage body of the disclosure.

Fig. 13 is a flowchart of an embodiment of the composition estimating method of a ceramic heat storage body of the disclosure.

Fig. 14 is a table illustrating the compositions (weight% for each component) of samples (Embodiment 5-A to 5-K) pertaining to 11 types of compositions usable for the embodiment of Fig. 13.

Fig. 15 is a graph pertaining to emissivity (no unit; vertical axis) actually measured for each wavelength ($\mu$m; horizontal axis) in Embodiments 5-A to 5-D.

Fig. 16 is a graph pertaining to the emissivity (no unit; vertical axis) actually measured for each wavelength ($\mu$m; horizontal axis) in Embodiments 5-E to 5-H.

Fig. 17 is a graph pertaining to the emissivity (no unit; vertical axis) actually measured for each wavelength ($\mu$m; horizontal axis) in Embodiments 5-I to 5-J and Comparative Example 5.

Fig. 18 is a graph pertaining to the emissivity (no unit; vertical axis) actually measured for each wavelength ($\mu$m; horizontal axis) in Embodiment 5-K and Embodiments 5-1 to 5-3.

Fig. 19 is a table illustrating a composition ($x_K$, $y_K$, $z_K$, $v_K$, $w_K$) and an emissivity group ($X_K$, $Y_K$, $Z_K$, $V_K$, $W_K$) pertaining to Embodiment 5-K, specific values for composition parameters ($x$, $y$, $z$, $v$, $w$) and specific values for relative emission parameters ($X$, $Y$, $Z$, $V$, $W$) pertaining to Embodiments 5-1 to 5-3, the compositions of which are estimated by the embodiment of Fig. 13, and an example of a multiple regression analysis result pertaining to the embodiment of Fig. 13.

DESCRIPTION OF PREFERRED EMBODIMENTS

The following describes embodiments of the disclosure based on the drawings.

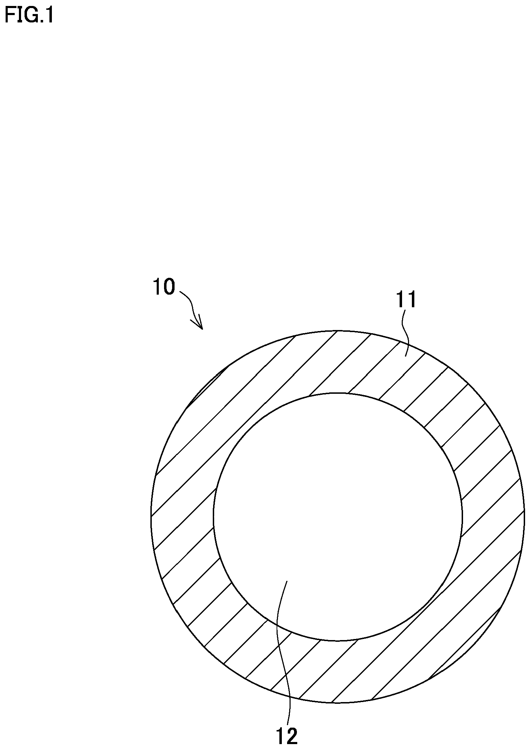

Fig. 1 is a cross-sectional view of a ceramic heat storage body of the disclosure.

A plurality of ceramic heat storage bodies 10 are filled in a heat storage tank of a regenerative heat storage burner and the like. Ceramic heat storage bodies 10 are used for heat storage and heat exchange of high-temperature gas.

As illustrated in Fig. 1, the ceramic heat storage body 10 includes a closed spherical shell-like shell 11 containing alumina as a main component and a spherical hollow portion 12 formed inside the shell 11. The shell 11 does not have an opening connecting between the hollow portion 12 and an outside of the shell 11 except micro pores caused by a minute structure that a ceramic has.

The following describes a method for manufacturing the ceramic heat storage body 10.

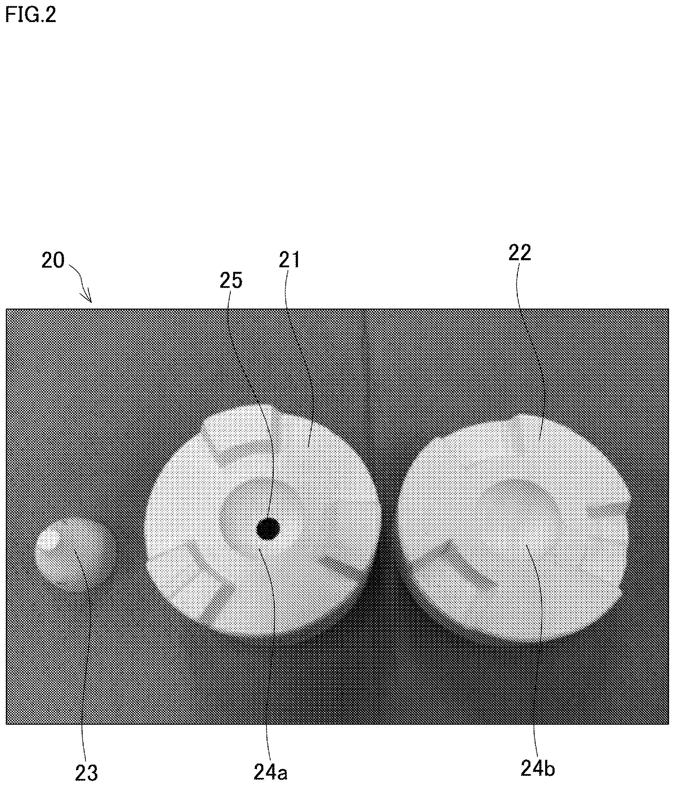

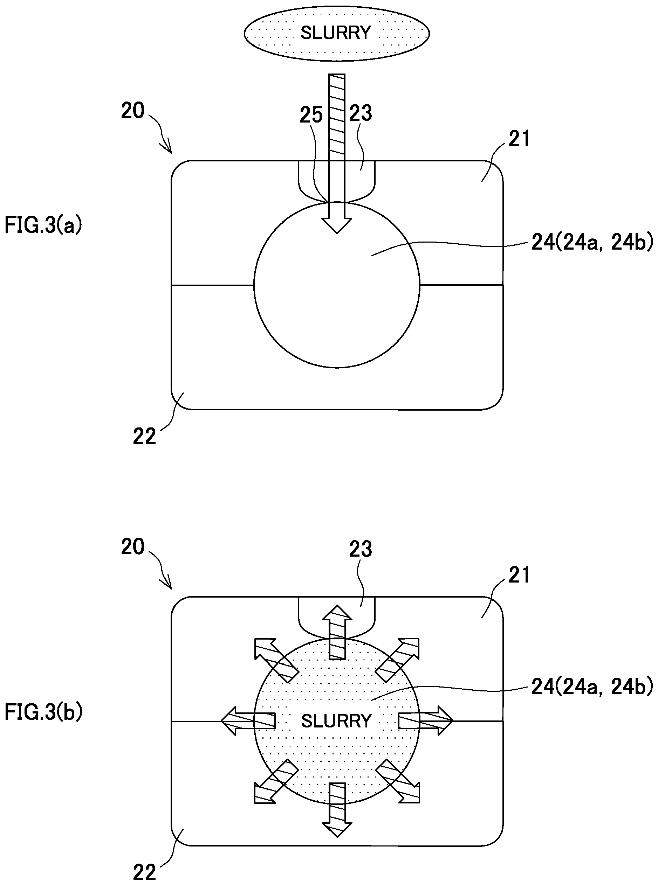

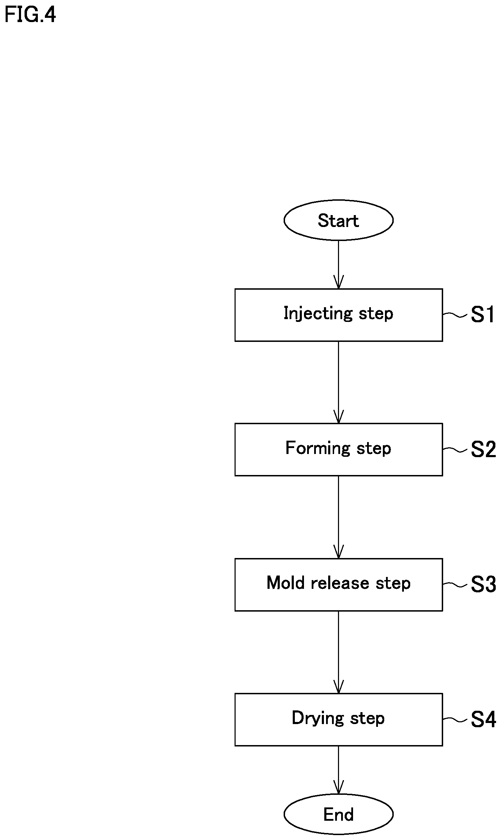

Fig. 2 is an explanatory view illustrating an exemplary mold for manufacturing the ceramic heat storage body of the disclosure. Figs. 3(a) and 3(b) are explanatory views illustrating a manufacturing process of the ceramic heat storage body of the disclosure. Fig. 4 is a flowchart illustrating manufacturing steps of the ceramic heat storage body of the disclosure.

The ceramic heat storage body 10 can be manufactured by slip casting (slipcasting). As illustrated in Fig. 2, a plaster mold 20 as a forming mold includes an upper half mold 21 having a cavity 24a in a shape of a hemisphere that is an upper outer surface shape of the shell 11, a lower half mold 22 having a cavity 24b in a shape of a hemisphere that is a lower outer surface shape of the shell 11, and a lid portion 23. The plaster mold 20 is made of plaster as a permeable material that permits permeation of a predetermined fluid.

By combining the upper half mold 21 and the lower half mold 22, the cavity 24a and the cavity 24b are fitted with one another and built into a cavity 24 in a shape of a sphere that is the outer surface shape of the shell 11 of the ceramic heat storage body 10.

Moreover, in the upper half mold 21, an injection hole 25 is formed for injecting slurry that includes a ceramic constituting the shell 11 of the ceramic heat storage body 10 into the cavity 24 of the plaster mold 20. The injection hole 25 is drilled at the upper side of an upper end portion of the cavity 24a and extends in a vertical direction. The lid portion 23 is used for closing the injection hole 25 from the outside.

In order to form the ceramic heat storage body 10, first, ceramic powder that contains alumina constituting the shell 11 and a dispersion medium are mixed to obtain the slurry.

The obtained slurry is injected via the injection hole 25 into the cavity 24 of the plaster mold 20 (injecting step S1), and as illustrated in Fig. 3(a), the injection hole 25 is closed by the lid portion 23. The plaster mold 20 permits permeation of the dispersion medium, and accordingly, when the plaster mold 20 is allowed to stand for a predetermined period in a state where the slurry is injected, the dispersion medium in the slurry is absorbed into the plaster mold 20 as illustrated by arrows in Fig. 3(b). As the dispersion medium is absorbed into the plaster mold 20, the ceramic powder dispersed into the dispersion medium moves and deposits on an outer surface of the cavity 24 (an inner surface of the plaster mold 20) with an approximately uniform thickness. With this, a formed body of the shell 11 internally having the hollow portion 12 is obtained (forming step S2).

The formed body is released from the plaster mold 20 (mold release step S3), and then dried and fired (drying step S4), thereby manufacturing the ceramic heat storage body 10.

Thus, the ceramic heat storage body 10 including the closed shell 11 that internally has the hollow portion 12 can be easily manufactured only by simple operations of injecting the slurry in which the ceramic powder and the dispersion medium are mixed into the plaster mold 20, and then, allowing the plaster mold 20 to stand.

Moreover, by using the plaster mold 20 in manufacturing the ceramic heat storage body 10, a dimensional variation of the manufactured ceramic heat storage body 10 is within $\pm 1$ mm. Therefore, the ceramic heat storage body 10 having a stable shape can be manufactured.

The obtained ceramic heat storage body 10 may have a small hole, which is an injection mark in the injecting step S1, generated on an external surface. In that case, the hole as an injection mark preferably has a diameter smaller than an average diameter of the hollow portion 12.

[Embodiment 1 and Comparative Example 1]

The following describes Embodiment 1 manufactured by the above manufacturing method and Comparative Example 1 that does not belong to the disclosure. Note that the disclosure is not limited to these embodiments.

Embodiment 1 was manufactured by the following method.

For the ceramic heat storage body 10 of Embodiment 1, one in which a mixture of $Cr_2O_3$, $Fe_3O_4$, $Mn_2O_3$, and CoO as an additive was added to AES-12 containing alumina (manufactured by Sumitomo Chemical Company, Limited) as ceramic powder was used. In Embodiment 1, as a proportion, 92 weight% AES-12 and the 8 weight% additive (each compound was mixed in an amount of 2 weight%) were mixed. As a dispersion medium for obtaining slurry, Celuna D-305 (manufactured by Chukyo Yushi Co., Ltd.) as a dispersant in an amount of the same weight% as the ceramic powder and distilled water in an amount of half the weight% of the ceramic powder were used. As the ceramic powder, besides the above-described AES-12, even when, for example, SA-34 (manufactured by Nippon Light Metal Company, Ltd.) is used, equivalent performance can be obtained.

First, the ceramic powder, the Celuna D-305 in an amount of the same weight% as the ceramic powder, and the distilled water in an amount of half the weight% of the ceramic powder were mixed and went through a defoaming process to obtain slurry. At this time, a solid concentration of the slurry becomes approximately 32 volume%.

The obtained slurry was injected into the cavity 24 of the plaster mold 20.

In a state where the slurry was injected and the injection hole 25 was closed by the lid portion 23, the plaster mold 20 was allowed to stand. After a predetermined period elapsed, the plaster mold 20 was inverted upside down and allowed to stand further for a predetermined period. The plaster mold 20 was allowed to absorb the dispersion medium sufficiently, causing AES-12 to deposit on the outer surface of the cavity 24, and a formed body was obtained.

After the formed body was released from the plaster mold 20, it was dried for a predetermined period. After the formed body was dried, it was fired at 1600°C to obtain the ceramic heat storage body 10 of Embodiment 1.

The obtained ceramic heat storage body 10 includes the black shell 11 and the hollow portion 12.

Comparative Example 1 is a conventional ceramic heat storage body made of alumina, is manufactured by a known method, and has a white solid spherical shape.

First, physical quantities of Embodiment 1 and Comparative Example 1 are compared.

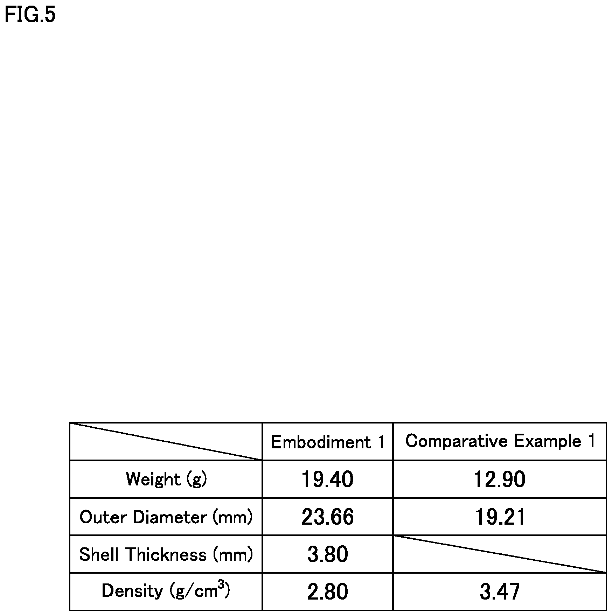

Fig. 5 is a table illustrating the physical quantities of Embodiment 1 and Comparative Example 1.

Embodiment 1 had a weight of 19.40 g, an outer diameter of 23.66 mm, an average thickness of the shell 11 of 3.80 mm, and a density of 2.80 $g/cm^3$.

Comparative Example 1 had a weight of 12.90 g, an outer diameter of 19.21 mm, and a density of 3.47 $g/cm^3$.

As described above, the density of Embodiment 1 is approximately 4/5 of the density of Comparative Example 1. That is, Embodiment 1 realizes weight reduction from a conventional product (Comparative Example 1) by including the hollow portion 12 inside the shell 11.

Therefore, Embodiment 1 avoids breakage of the ceramic heat storage bodies 10 that exist at a lower portion of the heat storage tank and the like due to the weight of the ceramic heat storage bodies 10 that exist at an upper portion of the heat storage tank and the like, for example, when a plurality of ceramic heat storage bodies 10 are filled in a heat storage tank and the like of a regenerative heat storage burner and the like.

Next, using an FTIR unit (manufactured by Perkin Elmer, system 2000 type), reflectances of Embodiment 1 and Comparative Example 1 were measured in a measuring range of 370 $cm^{-1}$ to 7800 $cm^{-1}$ (effective range of 400 $cm^{-1}$ to 6000 $cm^{-1}$) at room temperature, and average absorbances at 1.7 $\mu$m to 2.7 $\mu$m, which is a center wavelength of radiant heat at 800°C to 1400°C as a representative operating temperature band of a heat storage body were calculated.

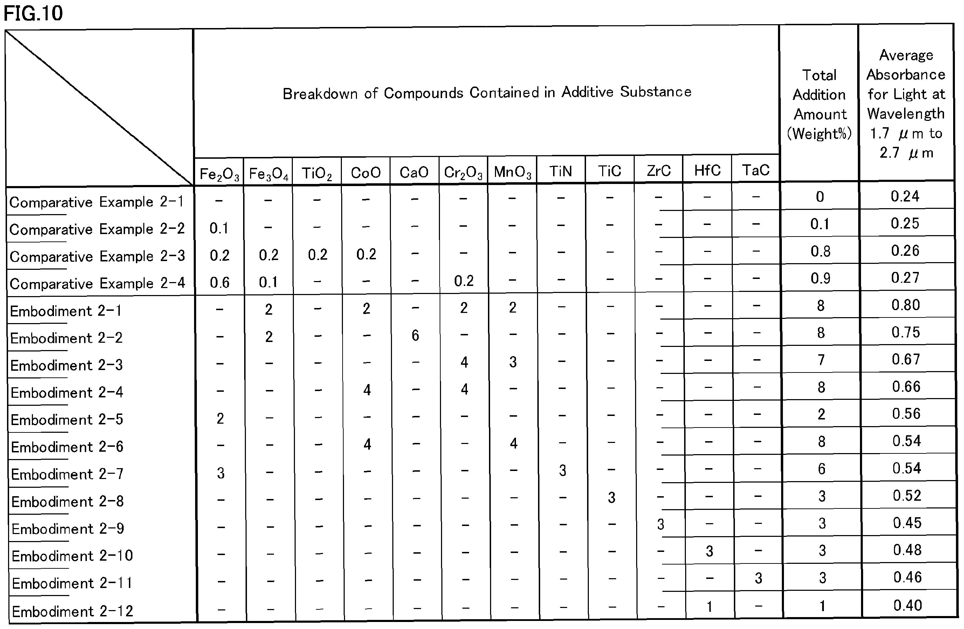

As a result of the measurement, the average absorbance at the wavelength of 1.7 $\mu$m to 2.7 $\mu$m of Embodiment 1 was 0.80. The average absorbance of Comparative Example 1 was 0.24 (see Embodiment 2-1 and Comparative Example 2-1 in Fig. 10).

Therefore, Embodiment 1 manufactured by adding the additive to alumina has a very high average absorbance at 1.7 $\mu$m to 2.7 $\mu$m, which is the center wavelength of radiant heat at 800°C to 1400°C as the representative operating temperature band of a heat storage body.

Subsequently, thermal behavior of Embodiment 1 and Comparative Example 1 is compared.

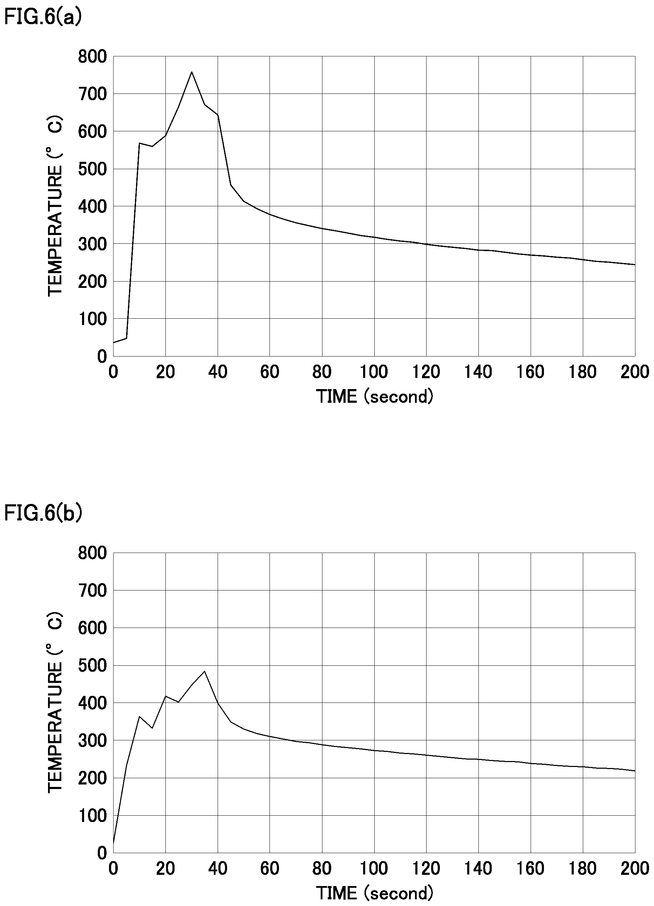

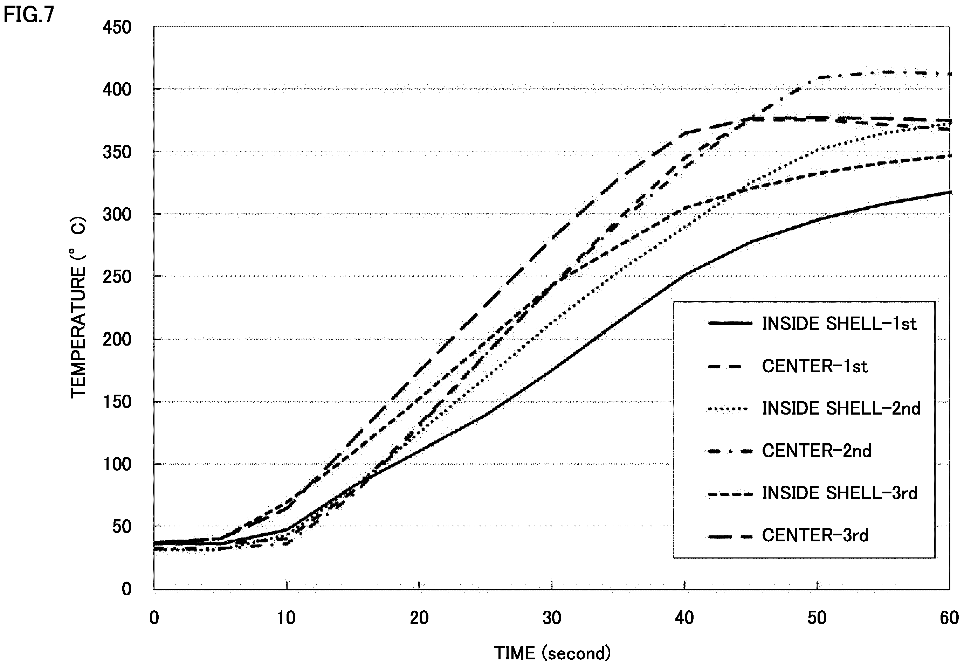

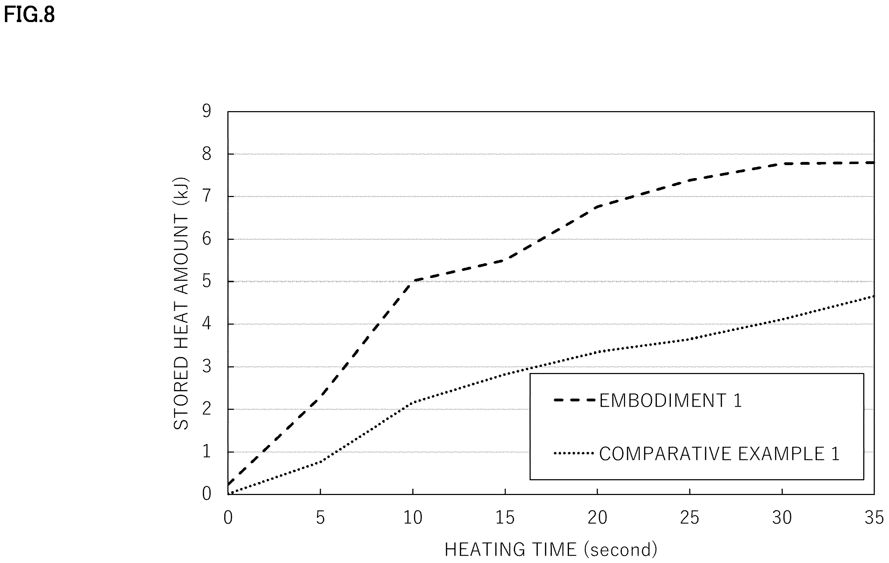

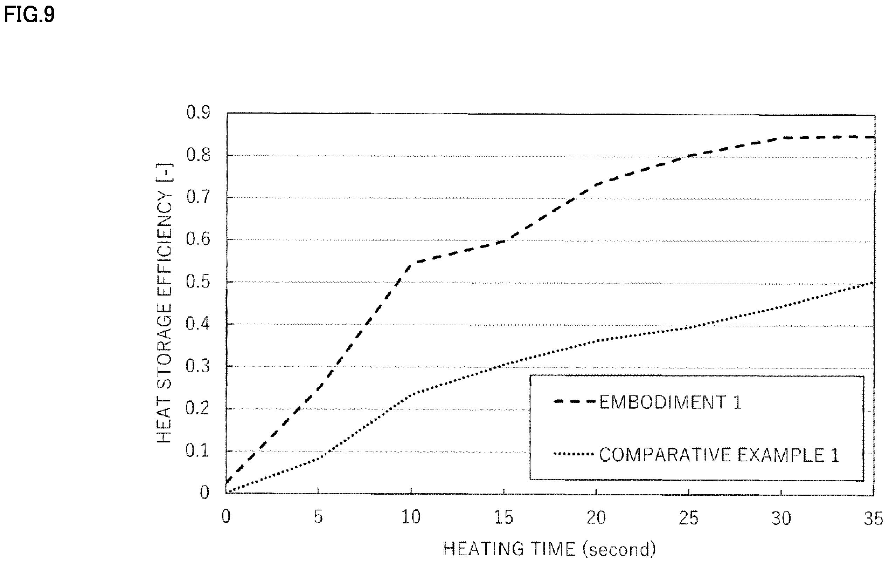

Fig. 6 includes graphs illustrating temperature rise behavior of Embodiment 1 and Comparative Example 1, illustrating Embodiment 1 in Fig. 6(a) and Comparative Example 1 in Fig. 6(b). Fig. 7 is a graph illustrating changes of a center temperature and a shell inner surface temperature of Embodiment 1. Fig. 8 is a graph illustrating stored heat amount behavior of Embodiment 1 and Comparative Example 1. Fig. 9 is a graph illustrating heat storage efficiency behavior of Embodiment 1 and Comparative Example 1.

For the thermal behavior, Embodiment 1 and Comparative Example 1 were heated by a gas burner, and a temperature at each portion was measured using a thermocouple. The temperature of the gas burner was adjusted to be 1300°C on average at positions of 30 mm away from outer surfaces of Embodiment 1 and Comparative Example 1.

First, Embodiment 1 and a comparison were heated by the gas burner, and temperature changes on external surfaces over time were measured.

As illustrated in Fig. 6(a), the external surface temperature of Embodiment 1 became approximately 750°C after the heating period of 30 seconds. As illustrated in Fig. 6(b), the external surface temperature of Comparative Example 1 became approximately 580°C after the heating period of 30 seconds.

Accordingly, Embodiment 1 exhibited a 100°C or more higher value than Comparative Example 1. This is considered to result from the fact that in contrast to the average absorbance of Comparative Example 1 of 0.24, Embodiment 1 has a very high average absorbance of 0.80 and efficiently absorbs radiant energy emitted from a flame of the gas burner. That is, Embodiment 1 manufactured by adding the additive to alumina has higher thermal efficiency.

Next, Embodiment 1 was heated by the gas burner, and changes in the center temperature of the hollow portion 12 and the temperature on the inner surface of the shell 11 over time during heating were measured. The measurement was attempted three times.

As a result, as illustrated in Fig. 7, at every attempt, Embodiment 1 exhibited behavior in which the center temperature of the hollow portion 12 transitioned at a higher temperature than the inner surface temperature of the shell 11. This can be considered to result from the fact that Embodiment 1 is manufactured by mixing the additive to the ceramic powder, and therefore, not only the outer surface of the shell 11 but also its inner surface becomes a surface having a high average absorbance.

Accordingly, it is considered that when Embodiment 1 was heated (during heat storage) the center temperature of the hollow portion 12 became higher than the inner surface temperature of the shell 11, and the temperature of the hollow portion 12 was transferred in heat to the shell 11, resulting in an increase in the external surface temperature of the shell 11. That is, in Embodiment 1 manufactured by adding the additive to alumina, the center temperature of the hollow portion 12 becomes higher than the inner surface temperature of the shell 11, and therefore, Embodiment 1 has higher thermal efficiency.

Next, Embodiment 1 and Comparative Example 1 were heated by the gas burner, and changes in stored heat amounts over time were measured.
For calculating the stored heat amounts, the external surface temperatures were used.

As a result, as illustrated in Fig. 8, the stored heat amount of Embodiment 1 became 7.78 kJ after the heating period of 30 seconds. The stored heat amount of Comparative Example 1 became 4.11 kJ after the heating period of 30 seconds.

Accordingly, Embodiment 1 can store heat more efficiently than Comparative Example 1. This is considered because Embodiment 1 eliminates a neighborhood of the center portion of Comparative Example 1 by having the hollow portion 12 inside the shell 11, therefore increasing effective heat storage volume. The neighborhood of the center portion of Comparative Example 1 could not be used for heat storage only for the heating period of around 30 seconds because of heat-transfer efficiency. That is, Embodiment 1 has high thermal efficiency. Moreover, in particular, Embodiment 1 manufactured by adding the additive to alumina has a high average absorbance and therefore, has higher thermal efficiency.

Next, from each of the stored heat amount changes of Embodiment 1 and Comparative Example 1, heat storage efficiency over time was calculated.

As a result, as illustrated in Fig. 9, the heat storage efficiency of Embodiment 1 became 0.85 after the heating period of 30 seconds. The heat storage efficiency of Comparative Example 1 became 0.45 after the heating period of 30 seconds.

Accordingly, Embodiment 1 has higher heat storage efficiency than Comparative Example 1. In particular, since Embodiment 1 manufactured by adding the additive to alumina can absorb the radiant energy emitted from the flame of the gas burner and use it for heat storage, Embodiment 1 has higher heat storage efficiency. That is, Embodiment 1 has high thermal efficiency. Moreover, in particular, Embodiment 1 manufactured by adding the additive to alumina has a high average absorbance and therefore, has higher thermal efficiency.

Embodiment 1 configured as described above contains alumina as a main component and has an average absorbance larger than 0.3 at 1.7 $\mu$m to 2.7 $\mu$m, which is the center wavelength of radiant heat at 800°C to 1400°C.

In addition to alumina, Embodiment 1 contains oxides containing Cr, Fe, Mn, and Co in an amount of 1 weight% or more in compound equivalent.

Furthermore, Embodiment 1 is a shell that has an outer surface in a shape of a spheroid including a sphere and internally has a hollow portion.

Moreover, in Embodiment 1, during heat storage, the center temperature of the hollow portion 12 is higher than the inner surface temperature of the shell 11.

Accordingly, since Embodiment 1 has a high average absorbance, Embodiment 1 is high in thermal efficiency even in a thermally non-equilibrium state, such as in a regenerative system, and is high in maintainability because it is difficult to break. While Embodiment 1 has high performance, it is only necessary to add easily obtainable oxides, and therefore, Embodiment 1 is easily manufacturable at a low price.

Further, Embodiment 1 is manufactured by the manufacturing method including the injecting step S1, the forming step S2, the mold release step S3, and the drying step S4. In the injecting step S1, slurry including ceramic powder, a dispersant, and water is injected into the plaster mold 20 having a shape of the shell 11 without having an opening. In the forming step S2, the plaster mold 20 is allowed to absorb the dispersant and water to obtain a formed body that includes the shell 11 and the hollow portion 12 formed inside the shell 11. In the mold release step S3, the formed body is released from the plaster mold 20. In the drying step S4, the released formed body is dried or fired.

Accordingly, the ceramic heat storage body 10 including the closed shell 11 that internally has the hollow portion 12 can be easily manufactured.

[Embodiment 2 and Comparative Example 2]

Subsequently, the following describes Embodiment 2 (Embodiments 2-1 to 2-12) manufactured by the above manufacturing method, to which an additive containing various compounds was added, and Comparative Example 2 (Comparative Examples 2-1 to 2-4) that does not belong to the disclosure. Note that the disclosure is not limited to these embodiments.

Fig. 10 is a table illustrating breakdowns of compounds and average absorbances in Embodiment 2 and Comparative Example 2.

Comparative Example 2-1 is a conventional ceramic heat storage body made of alumina, is manufactured by a known method, and has a white solid spherical shape.

Comparative Example 2-2 is manufactured similarly to Embodiment 2-1 except that one in which $Fe_2O_3$ (0.1 weight%) was added as an additive to AES-12 was used as ceramic powder.

Comparative Example 2-3 is manufactured similarly to Embodiment 2-1 except that one in which a mixture of $Fe_2O_3$ (0.2 weight%), $Fe_3O_4$ (0.2 weight%), $TiO_2$ (0.2 weight%), and CoO (0.2 weight%) was added as an additive to AES-12 was used as ceramic powder.

Comparative Example 2-4 is manufactured similarly to Embodiment 2-1 except that one in which a mixture of $Fe_2O_3$ (0.6 weight%), $Fe_3O_4$ (0.1 weight%), and $Cr_2O_3$ (0.2 weight%) was added as an additive to AES-12 was used as ceramic powder.

Embodiment 2-1 is manufactured similarly to Embodiment 1.

Embodiment 2-2 is manufactured similarly to Embodiment 2-1 except that one in which a mixture of $Fe_3O_4$ (2 weight%) and CaO (6 weight%) was added as an additive to AES-12 was used as ceramic powder.

Embodiment 2-3 is manufactured similarly to Embodiment 2-1 except that one in which a mixture of $Cr_2O_3$ (4 weight%) and $Mn_2O_3$ (3 weight%) was added as an additive to AES-12 was used as ceramic powder.

Embodiment 2-4 is manufactured similarly to Embodiment 2-1 except that one in which a mixture of CoO (4 weight%) and $Cr_2O_3$ (8 weight%) was added as an additive to AES-12 was used as ceramic powder.

Embodiment 2-5 is manufactured similarly to Embodiment 2-1 except that one in which $Fe_2O_3$ (2 weight%) was added as an additive to AES-12 was used as ceramic powder.

Embodiment 2-6 is manufactured similarly to Embodiment 2-1 except that one in which a mixture of CoO (4 weight%) and $Mn_2O_3$ (4 weight%) was added as an additive to AES-12 was used as ceramic powder.

Embodiment 2-7 is manufactured similarly to Embodiment 2-1 except that one in which a mixture of $Fe_2O_3$ (3 weight%) and TiN (3 weight%) was added as an additive to AES-12 was used as ceramic powder.

Embodiment 2-8 is manufactured similarly to Embodiment 2-1 except that one in which TiC (3 weight%) was added as an additive to AES-12 was used as ceramic powder.

Embodiment 2-9 is manufactured similarly to Embodiment 2-1 except that one in which ZrC (3 weight%) was added as an additive to AES-12 was used as ceramic powder.

Embodiment 2-10 is manufactured similarly to Embodiment 2-1 except that one in which HfC (3 weight%) was added as an additive to AES-12 was used as ceramic powder.

Embodiment 2-11 is manufactured similarly to Embodiment 2-1 except that one in which TaC (3 weight%) was added as an additive to AES-12 was used as ceramic powder.

Embodiment 2-12 is manufactured similarly to Embodiment 2-1 except that one in which HfC (1 weight%) was added as an additive to AES-12 was used as ceramic powder.

Using an FTIR unit (manufactured by Perkin Elmer, system 2000 type) on Embodiments 2-1 to 2-12 and Comparative Examples 2-1 to 2-4, reflectances of Embodiment 1 and Comparative Examples 1-1 to 1-2 were measured in a measuring range of 370 cm$^{-1}$ to 7800 cm$^{-1}$ (effective range of 400 cm$^{-1}$ to 6000 cm$^{-1}$) at room temperature, and average absorbances at 1.7 μm to 2.7 μm, which is the center wavelength of radiant heat at 800°C to 1400°C as the representative operating temperature band of a heat storage body were calculated.

As a result of the measurement, as illustrated in Fig. 10, the average absorbance of Comparative Example 2-1 was 0.24. The average absorbance of Comparative Example 2-2 was 0.25. The average absorbance of Comparative Example 2-3 was 0.26. The average absorbance of Comparative Example 2-4 was 0.27.

On the other hand, the average absorbance of Embodiment 2-1 at the wavelength of 1.7 μm to 2.7 μm was 0.80. The average absorbance of Embodiment 2-2 was 0.75. The average absorbance of Embodiment 2-3 was 0.67. The average absorbance of Embodiment 2-4 was 0.66. The average absorbance of Embodiment 2-5 was 0.56. The average absorbance of Embodiment 2-6 was 0.54. The average absorbance of Embodiment 2-7 was 0.54. The average absorbance of Embodiment 2-8 was 0.52. The average absorbance of Embodiment 2-9 was 0.45. The average absorbance of Embodiment 2-10 was 0.48. The average absorbance of Embodiment 2-11 was 0.46. The average absorbance of Embodiment 2-12 was 0.40.

Therefore, Embodiments 2-1 to 2-12 manufactured by adding an additive in an amount of 1 weight% or more to alumina have an average absorbance larger than 0.3 at 1.7 μm to 2.7 μm, which is the center wavelength of radiant heat at 800°C to 1400°C as the representative operating temperature band of a heat storage body.

Embodiment 2 configured as described above contains alumina as a main component and has an average absorbance larger than 0.3 at 1.7 μm to 2.7 μm, which is the center wavelength of radiant heat at 800°C to 1400°C.

In addition to alumina, Embodiment 2 contains a compound that contains at least one of Cr, Fe, Mn, Co, Ti, Ca, Zr, Hf, and Ta and is any one of a carbide, an oxide, and a nitride, or a mixture thereof in an amount of 1 weight% or more in compound equivalent.

Furthermore, Embodiment 2 is a shell that has an outer surface in a shape of a spheroid including a sphere and internally has a hollow portion.

Accordingly, since Embodiment 2 has a high average absorbance at 1.7 μm to 2.7 μm, which is the center wavelength of radiant heat at 800°C to 1400°C, Embodiment 2 is high in thermal efficiency even in a thermally non-equilibrium state, such as in a regenerative system. Moreover, it became apparent that a ceramic heat storage body in which a compound containing a carbide and a nitride is used as an additive has high thermal efficiency.

Further, Embodiment 2 (and Comparative Examples 2-2 to 2-4) is manufactured by the manufacturing method including the injecting step S1, the forming step S2, the mold release step S3, and the drying step S4. In the injecting step S1, slurry including ceramic powder, a dispersant, and water is injected into the plaster mold 20 having a shape of the shell 11 without having an opening. In the forming step S2, the plaster mold 20 is allowed to absorb the dispersant and water to obtain a formed body that includes the shell 11 and the hollow portion 12 formed inside the shell 11. In the mold release step S3, the formed body is released from the plaster mold 20. In the drying step S4, the released formed body is dried or fired.

Accordingly, the ceramic heat storage body 10 including the closed shell 11 that internally has the hollow portion 12 can be easily manufactured. Note that Comparative Examples 2-2 to 2-4 belong to the disclosure in terms of the manufacturing method.

[Embodiment 3 and Comparative Example 3]

Subsequently, the following shows calculation results of obtaining a relationship between a shell thickness and a stored heat amount/a recovered heat amount using simulation models simulating the ceramic heat storage body 10 manufactured by the above manufacturing method and describes Embodiment 3 (Embodiments 3-1 to 3-5) and Comparative Example 3 (Comparative Examples 3-1 to 3-5) that does not belong to the disclosure. Note that the disclosure is not limited to these embodiments.

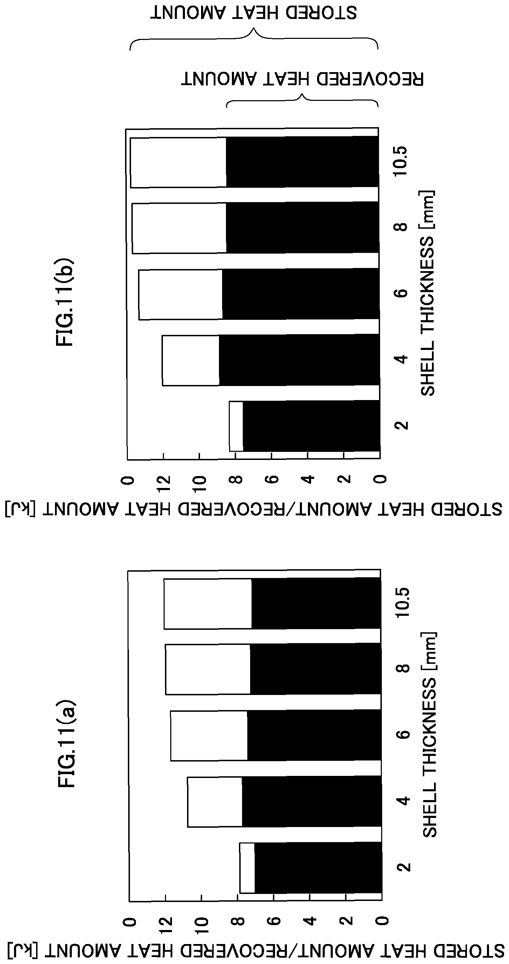

Fig. 11 includes graphs illustrating the relationship between the shell thickness and the recovered heat amount and between the shell thickness and the stored heat amount in Embodiment 3 and Comparative Example 3, showing the calculation result with the models having an average absorbance of 0.3 in Fig. 11(a) and the calculation result with the models having an average absorbance of 0.9 in Fig. 11(b).

Comparative Example 3 was a simulation model simulating a conventional ceramic heat storage body made of alumina, and Comparative Example 3-1 had a hollow spherical shape having an average absorbance of 0.9, an outer diameter of 21 mm, and a shell thickness of 2 mm.

In Comparative Example 3-2, the shell thickness was 4 mm.

In Comparative Example 3-3, the shell thickness was 6 mm.

In Comparative Example 3-4, the shell thickness was 8 mm.

In Comparative Example 3-5, the shell thickness was 10.5 mm. That is, Comparative Example 3-5 simulates a solid spherical shape.

Embodiment 3 was a simulation model simulating the ceramic heat storage body 10 manufactured similarly to Embodiment 1 and Embodiment 2, and Embodiment 3-1 had a hollow spherical shape having an average absorbance of 0.9, an outer diameter of 21 mm, and a shell thickness of 2 mm.

In Embodiment 3-2, the shell thickness was 4 mm.

In Embodiment 3-3, the shell thickness was 6 mm.

In Embodiment 3-4, the shell thickness was 8 mm.

In Embodiment 3-5, the shell thickness was 10.5 mm. That is, Embodiment 3-5 simulates a black solid spherical shape.

On the assumption of operating conditions of a regenerative system, external surfaces of heat storage balls were provided with a convection heat transfer coefficient (during heat storage: 1096 $Nm^3/h$, during heat radiation: 963 $Nm^3/h$), heat transfer simulation was used to obtain temperature distribution in one ball of the heat storage balls in a filling tank when the heat storage balls were exposed to temperature atmosphere conditions of 1200°C during the heat storage for 30 seconds and 20°C during the heat radiation for 30 seconds. From the obtained temperature distribution, the stored heat amount and the recovered heat amount were calculated.

As a result of the calculation, as illustrated in Fig. 11(a), in Comparative Example 3-1, the stored heat amount was 7.83 (kJ), and the recovered heat amount was 6.99 (kJ). In Comparative Example 3-2, the stored heat amount was 10.70 (kJ), and the recovered heat amount was 7.67 (kJ). In Comparative Example 3-3, the stored heat amount was 11.64 (kJ), and the recovered heat amount was 7.37 (kJ). In Comparative Example 3-4, the stored heat amount was 11.91 (kJ), and the recovered heat amount was 7.18 (kJ). In Comparative Example 3-5, the stored heat amount was 11.95 (kJ), and the recovered heat amount was 7.13 (kJ).

Meanwhile, as illustrated in Fig. 11(b), in Embodiment 3-1, the stored heat amount was 8.25 (kJ), and the recovered heat amount was 7.45 (kJ). In Embodiment 3-2, the stored heat amount was 11.94 (kJ), and the recovered heat amount was 8.75 (kJ). In Embodiment 3-3, the stored heat amount was 13.19 (kJ), and the recovered heat amount was 8.55 (kJ). In Embodiment 3-4, the stored heat amount was 13.55 (kJ), and the recovered heat amount was 8.34 (kJ). In Embodiment 3-5, the stored heat amount was 13.61 (kJ), and the recovered heat amount was 8.29 (kJ).

Accordingly, when compared with Comparative Example 3, Embodiment 3 can provide a higher stored heat amount and recovered heat amount if Embodiment 3 and Comparative Example 3 have an identical shell thickness, and therefore, it can be said that Embodiment 3 has excellent thermal efficiency.

Embodiment 3 configured as described above contains alumina as a main component and has an average absorbance larger than 0.3 at 1.7 $\mu$m to 2.7 $\mu$m, which is the center wavelength of radiant heat at 800°C to 1400°C.

In addition to alumina, Embodiment 3 contains a compound that contains at least one of Cr, Fe, Mn, Co, Ti, Ca, Zr, Hf, and Ta and is any one of a carbide, an oxide, and a nitride, or a mixture thereof in an amount of 1 weight% or more in compound equivalent.

Furthermore, Embodiment 3 is a shell that has an outer surface in a shape of a spheroid including a sphere and internally has a hollow portion.

Accordingly, since Embodiment 3 has a high average absorbance, Embodiment 3 is high in thermal efficiency even in a thermally non-equilibrium state, such as in a regenerative system.

Further, in Embodiments 3-2 to 3-5, when an average outer diameter of a shell is denoted by D and an average diameter of a hollow portion is denoted by *d*, *d* is smaller than (D - 8) mm.

Accordingly, Embodiments 3-2 to 3-5 can maintain the stored heat amount and a proportion of the recovered heat amount to the stored heat amount at a high level and therefore, is very high in thermal efficiency.

[Examination Example]

In Examination Example using a simulation model that simulates a hollow spherical ceramic heat storage body having an average absorbance of 0.9 and an outer diameter of 13 mm, it has been clarified that when the simulation model has a shell thickness of 6.5 mm, that is, when it has a solid spherical shape, the thermal efficiency becomes highest.

In Examination Example configured as described above, when the average outer diameter of the shell is denoted by D and the average diameter of the hollow portion is denoted by *d*, D is 13 mm or less, and *d* is 1 mm or less (including 0 mm, that is, a solid spherical shape).

Accordingly, Examination Example is very high in thermal efficiency even in a thermally non-equilibrium state, such as in a regenerative system.

[Embodiment 4 and Comparative Example 4]

Subsequently, the following indicates a maintainability examination test using the ceramic heat storage body 10 manufactured by the above manufacturing method and describes Embodiment 4 and Comparative Example 4 that does not belong to the disclosure. Note that the disclosure is not limited to these embodiments.

Comparative Example 4 is a conventional ceramic heat storage body made of alumina, is manufactured by a known method, and has a white solid spherical shape.

Embodiment 4 is the ceramic heat storage body 10 manufactured similarly to Embodiment 1 and Embodiment 2-1.

In the maintainability examination test, a mixed gas containing fine iron oxide and carbon was blown at 100 L/min into a small-sized heat storage tank equipped with approximately 300 pieces of Comparative Example 4 or Embodiment 4, and after a predetermined period elapsed, dirt that adhered to an external surface of Comparative Example 4 or Embodiment 4 was observed. Afterwards, the surface was cleaned, and cleaning performance was confirmed.

As a result, it was found that adherence of dirt on the surface was obviously less in Embodiment 4 compared with Comparative Example 4.

Further, Comparative Example 4 after the test was difficult to clean because they were abraded with one another, resulting in the generation of multiple bumps, dips, and pores on the surfaces, and the dirt that adhered to them was trapped. On the other hand, Embodiment 4 after the test was easy to remove the adhering dirt because they kept spherical shapes with smooth surfaces having few bumps, dips, and pores on the surface. Accordingly, it can be said that Embodiment 4 is difficult for contaminants to adhere to, difficult to break owing to excellent abrasion resistance, and therefore, high in maintainability.

The above is a description of the disclosure based on the illustrated examples, and the technical scope is not limited to the description. For example, it is only necessary for the shell to have a closed shape that is a spheroid including a hollow portion, and the shell may have a shape, such as a rugby ball form.

In the relationship between the average outer diameter D of the shell and the average diameter *d* of the hollow portion, as long as *d* falls within the range of smaller than (D - 8) mm (including 0 mm in some cases), the thickness of the shell is adjustable as necessary such that the stored heat amount and heat storage performance including the heat storage efficiency and heat radiation efficiency become desired values.

The ceramic powder and the dispersion medium are not limited to those listed in the above embodiments, and any material can be selected as long as the material can achieve resistance to breakage and high thermal efficiency.

It is only necessary for the additive to be a compound containing at least one of Cr, Fe, Mn, Co, Ti, Ca, Zr, Hf, and Ta and be added in an amount of 1 weight% or more as any one of an oxide, a carbide, and a nitride, or a mixture thereof, and the selection, mixing, and addition amount of the compound is arbitrarily settable so as to have desired performance.

The forming mold may be divided into left and right parts, and the like, and may be divided into three or more parts.

The material of the forming mold is not limited as long as the forming mold can absorb the dispersion medium.

The number, arrangement, extending direction, and the like of injection holes of the forming mold are not limited to the ones described above.

In the method for manufacturing the ceramic heat storage body, the drying step may be one in which firing is not performed, or may be one in which firing is performed immediately after the mold release.

For manufacturing the ceramic heat storage body, while slip casting is preferably used, a method, such as extrusion molding, tumbling forming, and press forming, may be used.

[Embodiment 5 and Comparative Example 5]

Furthermore, in the ceramic heat storage body 10 that belongs to the disclosure, a method for estimating a more satisfactory composition, that is, a more satisfactory amount of alumina as a main component and more satisfactory type and amount of a compound (additive substance) other than alumina (composition estimating method) is described by exemplifying Embodiment 5 (Embodiments 5-1 to 5-3 and Embodiments 5-A to 5-K) and Comparative Example 5. In addition, a method for manufacturing the ceramic heat storage body 10 using the method are also described. Note that the disclosure is not limited to these embodiments.

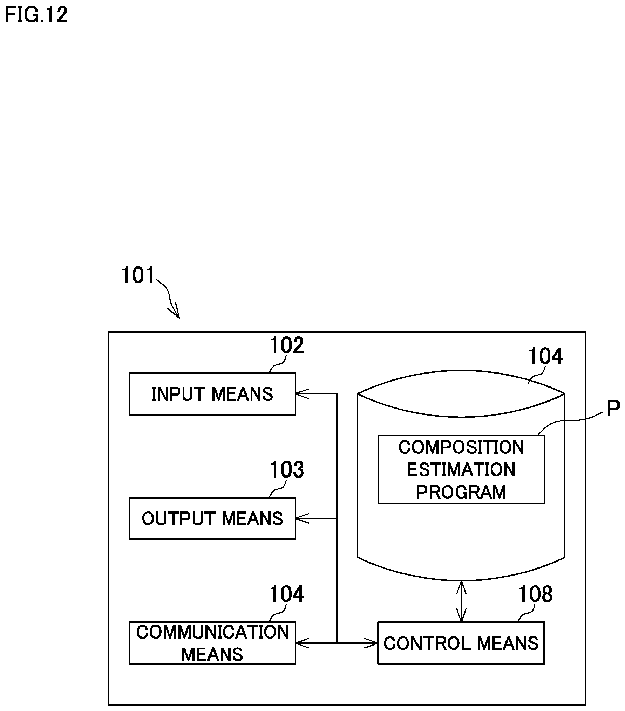

The composition estimating method can be executed by a computer 101 as illustrated in Fig. 12. The computer 101 includes an input means 102, an output means 103, a storage means 104, a communication means 106, and a control means 108. Note that a part of these means may be omitted.

The input means 102 is a means of inputting information, and for example, at least any one of a pointing device, a microphone, and a keyboard.

The output means 103 is a means of outputting information, and for example, at least any one of a display, a speaker, and a printer. For example, one device that doubles as the input unit 102 and the output means 103, such as a touch panel, may be used. Further, one device that serves as a plurality of other means may be used.

The storage means 104 is a means of storing information, and for example, at least any one of a memory, a hard disk drive (HDD), a solid state drive (SSD), and an optical disk drive. In the storage means 104, a composition estimation program P is stored. The composition estimation program P includes a plurality of steps for estimating a more satisfactory composition of the ceramic heat storage body 10.

The communication means 106 is a means of communicating information. The communication means 106 can communicate with, for example, at least any one of a local area network (LAN), the Internet, a telephone network, and a specialized line. The communication means 106 can communicate in at least one of wireless and wired manners.

The control means 108 is a means for controlling various means and for example, a central processing unit (CPU). The control means 108 can execute various programs. The programs may include a mathematical statistics program.

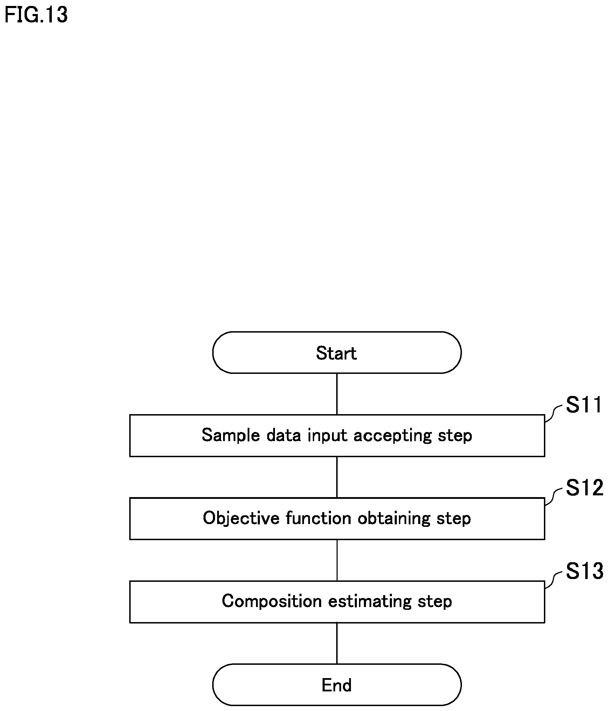

As illustrated in Fig. 13, in the composition estimating method that can be implemented by the control means 108 that executes the composition estimation program P, first, the control means 108 demands an input about a correspondence relationship between amount proportions pertaining to compositions of a plurality of samples (one example of specific values for the compositions), and actually measured emissivity at a predetermined wavelength (sample data input accepting step S11). At least a part of the composition of each sample is different from the compositions of other samples.

For example, a user actually measures emissivity of each of a plurality of samples A, B ... containing, as an amount proportion, alumina in an amount of $x_A$, $x_B$ ... weight% in sequence, $Co_3O_4$ in an amount of $y_A$, $y_B$ ... weight%, $Fe_3O_4$ in an amount of $z_A$, $z_B$ ... weight%, $Cr_2O_3$ in an amount of $v_A$, $v_B$ ... weight%, and $MnO_2$ in an amount of $w_A$, $w_B$ ... weight%. The emissivity at the wavelength of 1.65 $\mu$m is defined as $X_A$, $X_B$ ... in sequence, the emissivity at the wavelength of 1.8 $\mu$m is defined as $Y_A$, $Y_B$ ... in sequence, the emissivity at the wavelength of 2.1 $\mu$m is defined as $Z_A$, $Z_B$ ... in sequence, the emissivity at the wavelength of 2.6 $\mu$m is defined as $V_A$, $V_B$ ... in sequence, and the emissivity at the wavelength of 3.1 $\mu$m is defined as $W_A$, $W_B$ ... in sequence. The user obtains an emissivity group ($X_A$, $Y_A$, $Z_A$, $V_A$, $W_A$) corresponding to the amount proportion ($x_A$, $y_A$, $z_A$, $v_A$, $w_A$), an emissivity group ($X_B$, $Y_B$, $Z_B$, $V_B$, $W_B$) corresponding to the amount proportion ($x_B$, $y_B$, $z_B$, $v_B$, $w_B$), .... Then, the user inputs a plurality of combinations of the specific amount proportions and the actually measured emissivity groups to the computer 101 via the input means 102.

Next, the control means 108 obtains a function (objective function) pertaining to the emissivity with the amount proportion as variables by mathematical programming from the relationship between the amount proportion and the emissivity in each sample (objective function obtaining step S12). While the objective function indicates a value corresponding to the emissivity, it can exceed 1 unlike the actual emissivity in a precise sense. Therefore, in the following, the objective function is viewed as the level of contribution of a composition parameter (variable) to the emissivity and referred to as a relative emission parameter.

For example, by multiple regression analysis as an example of mathematical programming, the control means 108 obtains respective coefficients $a_1$ to $e_5$ and respective intercepts $a_6$ to $e_6$ of pairs of the following formulae (least-square method). The formulae represent the objective functions pertaining to the relative emission parameters (X, Y, Z, V, W) with the composition parameters (x, y, z, v, w) as the variables, with which the sum of distances relative to a pair of specific values ($x_A$, $y_A$, $z_A$, $v_A$, $w_A$) for the composition to determine the composition parameter and specific values ($X_A$, $Y_A$, $Z_A$, $V_A$, $W_A$) for the emissivity to determine the relative emission parameter, and similarly, a pair of respective specific values ($x_B$, $y_B$, $z_B$, $v_B$, $w_B$) and ($X_B$, $Y_B$, $Z_B$, $V_B$, $W_B$), ... become the smallest value.

$$X = a_1x + a_2y + a_3z + a_4v + a_5w + a_6 \ldots \text{Formula (1-1)}$$

$$Y = b_1x + b_2y + b_3z + b_4v + b_5w + b_6 \ldots \text{Formula (1-2)}$$

$$Z = c_1x + c_2y + c_3z + c_4v + c_5w + c_6 \ldots \text{Formula (1-3)}$$

$$V = d_1x + d_2y + d_3z + d_4v + d_5w + d_6 \ldots \text{Formula (1-4)}$$

$$W = e_1x + e_2y + e_3z + e_4v + e_5w + e_6 \ldots \text{Formula (1-5)}$$

It is only necessary for the method for obtaining the objective function from the pair of the specific values in each sample to be the mathematical programming, and the method may be linear programming or may be dynamic programming. The mathematical programming may be performed by a mathematical statistics program.

Subsequently, the control means 108 estimates estimated values ($x_1$, $y_1$, $z_1$, $v_1$, $w_1$) of the respective variables of the composition parameters (x, y, z, v, w) with which the relative emission parameters are larger than any one of the samples and the emissivity is expected to further increase from the obtained objective functions, that is, the relative emission parameters (X, Y, Z, V, W) (composition estimating step S13).

The estimation can complete the estimation of a composition.

Note that the estimated values for a plurality of pairs may be estimated.

Then, in accordance with the estimated values $(x_1, y_1, z_1, v_1, w_1)$ for a more satisfactory composition of the ceramic heat storage body 10 found by the estimation of the composition, the ceramic heat storage body 10 is manufactured.

The following describes a more detailed example of the above composition estimating method and the manufacturing method of the ceramic heat storage body 10.

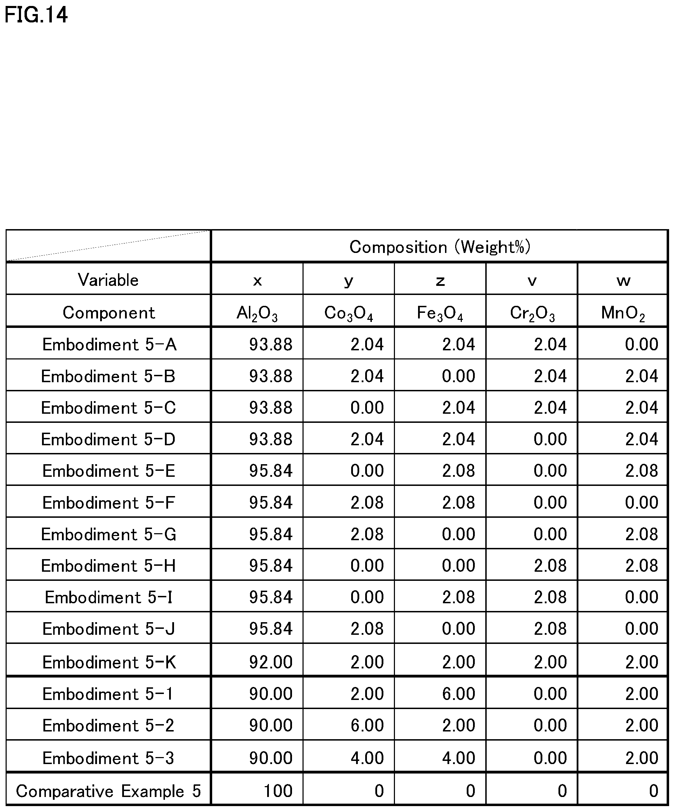

Fig. 14 is a table illustrating the specific values for the compositions (weight% for each component) of samples (Embodiment 5-A to 5-K) pertaining to 11 types of compositions in the sample data input accepting step S11. As long as the samples are plural, 10 types or less samples may be used, or 12 types or more samples may be used. In terms of improving the accuracy of mathematical programming, 5 types or more samples are preferred, and 10 types or more samples are more preferred.

For example, the specific values $(x_A, y_A, z_A, v_A, w_A) = (93.88, 2.04, 2.04, 2.04, 0)$ for the composition (weight%) of Embodiment 5-A. Mathematical formula of $w_A = 0$ indicates that $MnO_2$ is not included in Embodiment 5-A. For the weight proportion (g) of each component of Embodiment 5-A, alumina $(Al_2O_3):Co_3O_4:Fe_3O_4:Cr_2O_3$ = 92:2:2:2.

The specific values $(x_E, y_E, z_E, v_E, w_E) = (95.84, 0, 2.08, 0, 2.08)$ for the composition (weight%) of Embodiment 5-E. For the weight proportion (g) of each component of Embodiment 5-E, alumina:$Fe_3O_4:MnO_2$ = 92:2:2.

Furthermore, the specific values $(x_K, y_K, z_K, v_K, w_K) = (92, 2, 2, 2, 2)$ for the composition (weight%) of Embodiment 5-K. For the weight proportion (g) of each component of Embodiment 5-K, alumina:$Co_3O_4:Fe_3O_4:Cr_2O_3:MnO_2$ = 92:2:2:2:2.

All of Embodiments 5-A to 5-K are manufactured similarly to Embodiment 1. For comparison, Comparative Example 5 formed similarly to Comparative Example 1 is also manufactured. Since Comparative Example 5 has no additive substance, the specific values for the composition of Comparative Example 5 are (100, 0, 0, 0, 0).

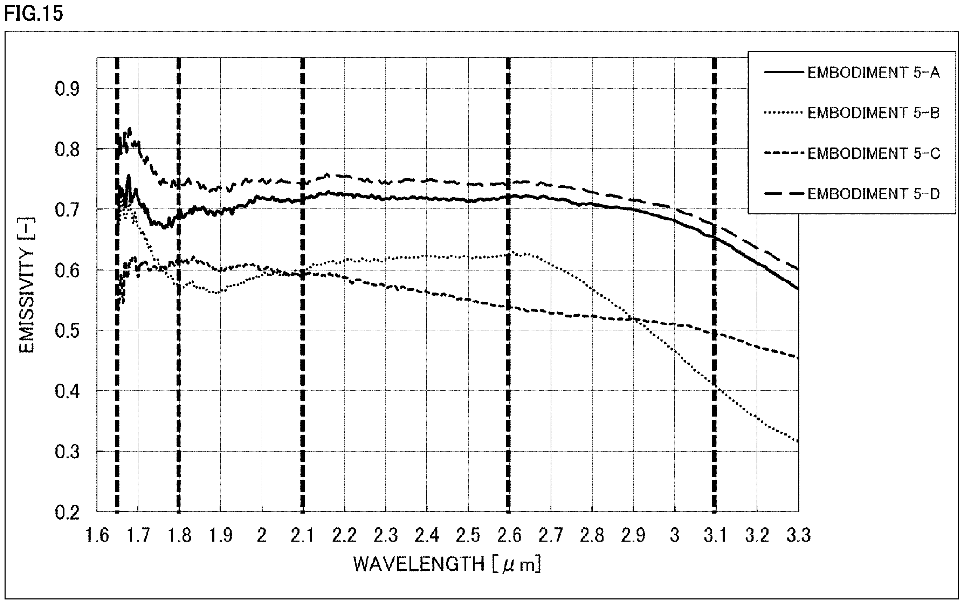

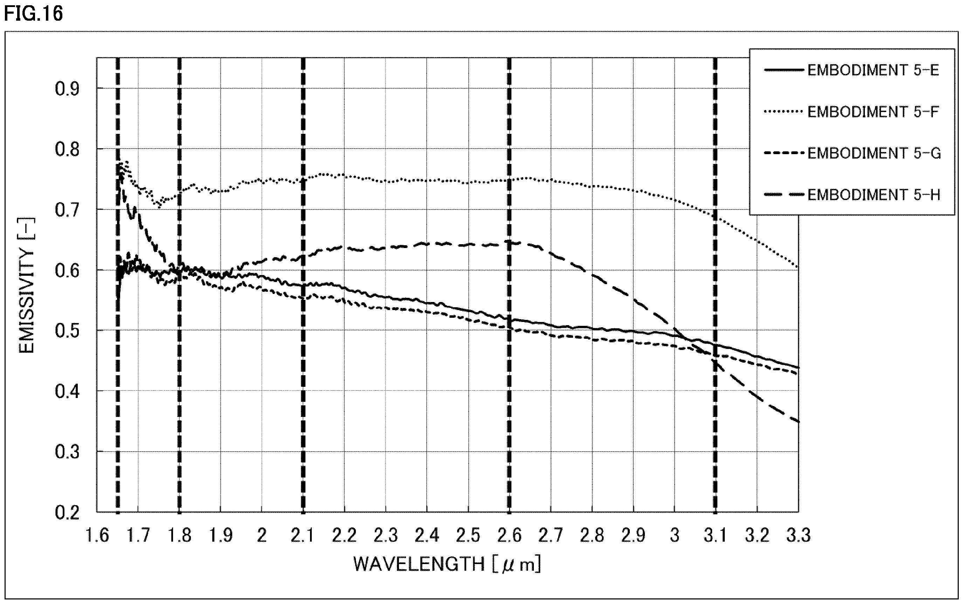

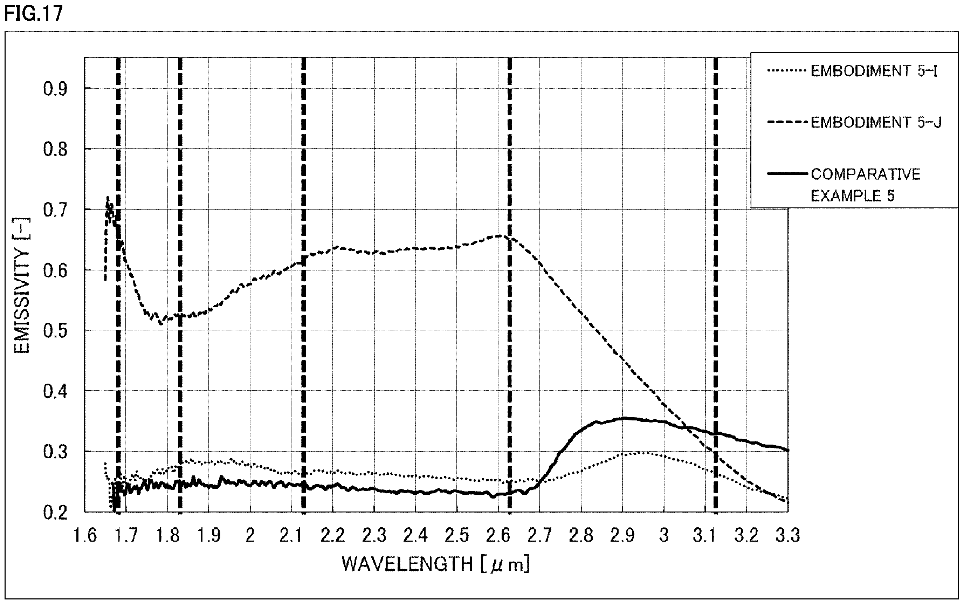

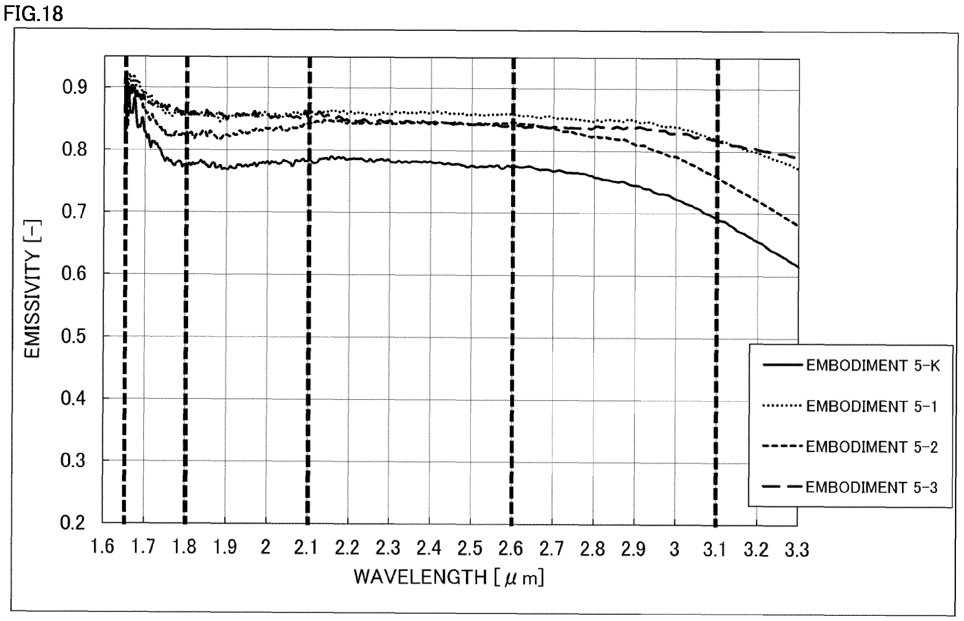

Fig. 15 is a graph pertaining to the emissivity (no unit; vertical axis) actually measured for each wavelength ($\mu$m; horizontal axis) in Embodiments 5-A to 5-D. Fig. 16 is a graph pertaining to the emissivity (no unit; vertical axis) actually measured for each wavelength ($\mu$m; horizontal axis) in Embodiments 5-E to 5-H. Fig. 17 is a graph pertaining to the emissivity (no unit; vertical axis) actually measured for each wavelength ($\mu$m; horizontal axis) in Embodiments 5-I to 5-J and Comparative Example 5. Fig. 18 is a graph pertaining to the emissivity (no unit; vertical axis) actually measured for each wavelength ($\mu$m; horizontal axis) in Embodiment 5-K and Embodiments 5-1 to 5-3.

By the actual measurement, the emissivity groups $(X_A, Y_A, Z_A, V_A, W_A)$ to $(X_K, Y_K, Z_K, V_K, W_K)$ pertaining to Embodiments 5-A to 5-K as the samples at each wavelength of 1.65 $\mu$m, 1.8 $\mu$m, 2.1 $\mu$m, 2.6 $\mu$m, and 3.1 $\mu$m are obtained (Step S11).

While the emissivity is measured as distribution in a wavelength band of 1.65 $\mu$m to 3.3 $\mu$m here, the emissivity may be measured only at required wavelengths (1.65 $\mu$m, 1.8 $\mu$m, 2.1 $\mu$m, 2.6 $\mu$m, 3.1 $\mu$m), or may be measured in a partial wavelength band including the required wavelengths. Each of the required wavelengths is a wavelength to which the interest is given, hereinafter referred to as a wavelength of interest as necessary, and a combination of them is referred to as an wavelength of interest group. In each of Figs. 15 to 18, vertical dotted lines indicating the respective wavelengths of interest are marked.

The wavelengths of interest are selected as those that can express a radiative property of the ceramic heat storage body 10 representatively, and preferably, a plurality of wavelengths of interest are selected to have similar intervals from one another in an infrared range or its partial range.

The obtained emissivity groups $(X_A, Y_A, Z_A, V_A, W_A)$ to $(X_K, Y_K, Z_K, V_K, W_K)$ are inputted into the computer 101 via the input means 102 and stored in the storage means 104 in a state where they are associated with the specific values $(x_A, y_A, z_A, v_A, w_A)$ to $(x_K, y_K, z_K, v_K, w_K)$ for the compositions. Note that the composition and the emissivity group of Comparative Example 5 may be also inputted.

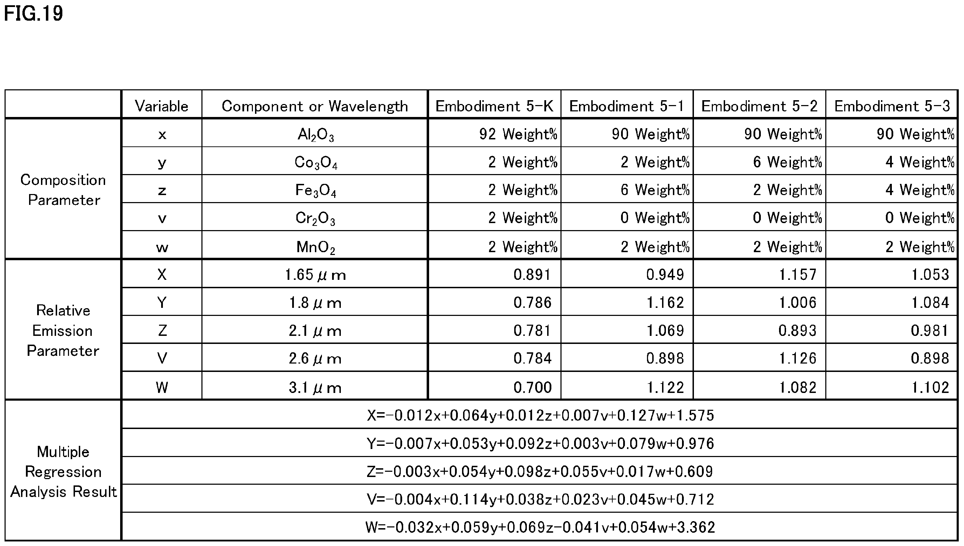

Then, by multiple regression analysis, the control means 108 calculates the relative emission parameters (X, Y, Z, V, W) as the objective functions with the composition parameters (x, y, z, v, w) as variables (Step S12) and stores the relative emission parameters (X, Y, Z, V, W) in the storage means 104. Here, the relative emission parameters (X, Y, Z, V, W) become as follows. Note that the formulae of the relative emission parameters (X, Y, Z, V, W) are also illustrated in Fig. 19.

$$X = -0.012x + 0.064y + 0.012z + 0.007v + 0.127w + 1.575 \ldots \text{Formula (2-1)}$$

$$Y = -0.007x + 0.053y + 0.092z + 0.003v + 0.079w + 0.976 \ldots \text{Formula (2-2)}$$

$$Z = -0.003x + 0.054y + 0.098z + 0.055v + 0.017w + 0.609 \dots \text{Formula (2-3)}$$

$$V = -0.004x + 0.114y + 0.038z + 0.023v + 0.045w + 0.712 \dots \text{Formula (2-4)}$$

$$W = -0.032x + 0.059y + 0.069z - 0.041v + 0.054w + 3.362 \dots \text{Formula (2-5)}$$

The control means 108 estimates the composition parameters (x, y, z, v, w) with which the relative emission parameters (X, Y, Z, V, W) become larger than any one of the samples and the emissivity is expected to improve (Step S13).

Here, the estimated values for the composition parameters (x, y, z, v, w) with which the emissivity is expected to improve relative to Embodiment 5-K (reference sample) having the largest emissivity at each wavelength of interest among the samples are estimated.

When the composition $(x_K, y_K, z_K, v_K, w_K)$ = (92, 2, 2, 2, 2) of Embodiment 5-K is applied to the formulae (2-1) to (2-5), the specific values (X, Y, Z, V, W) = (0.891, 0.786, 0.781, 0.784, 0.700) for the relative emission parameters of Embodiment 5-K are obtained.

Depending on the situations of the respective coefficients $a_1$ to $e_5$ and the respective intercepts $a_6$ to $e_6$ in the formulae (2-1) to (2-5) and the specific values $(x_K, y_K, z_K, v_K, w_K)$ for the composition of Embodiment 5-K, the control means 108 calculates the estimated values for the composition parameters (x, y, z, v, w) having larger specific values for the relative emission parameters (X, Y, Z, V, W) than the specific values (0.891, 0.786, 0.781, 0.784, 0.700) for the relative emission parameters of Embodiment 5-K. The estimated values for the composition parameters (x, y, z, v, w) having the specific values (X, Y, Z, V, W) for the relative emission parameters larger than the actually measured emissivity group $(X_K, Y_K, Z_K, V_K, W_K)$ of Embodiment 5-K may be calculated.

For example, the control means 108 obtains the estimated values for the composition parameters (x, y, z, v, w) by appropriately combining estimation items below.

The control means 108 estimates the estimated value for x to be smaller than $x_K$ based on the fact that the respective coefficients $a_1$ to $e_1$ for x are each minus in the formulae (2-1) to (2-5) (estimation item 1). However, x is preferably in excess of 80, more preferably 85 or more, and further preferably 90 or more, because alumina is a main component so that the excellent property as a ceramic is held in at least any one of the ease of manufacturing, the ease of handling, and low cost aspect. Further, alumina is a main component so that at least any one of sufficient strength, maintainability, and abrasion resistance is held.

The control means 108 estimates the estimated value for *v* to be smaller than $v_K$ based on the fact that the coefficient $e_4$ of v is minus in the formula (2-5) (estimation item 2).

The control means 108 estimates it so as to view an increase in the estimated value for *y* with respect to $y_K$ as more important than an increase in the estimated value for w with respect to $w_K$ based on the fact that the distribution of magnitudes of the coefficients $a_2$ to $e_2$ for *y* in the formulae (2-1) to (2-5) tends to be larger than the distribution of magnitudes of the coefficients as to $e_5$ for w (estimation item 3).

The control means 108 estimates it so as to view an increase in the estimated value for z with respect to $z_K$ as more important than an increase in the estimated value for w with respect to $w_K$ based on the fact that the distribution of magnitudes of the coefficients $a_3$ to $e_3$ for z in the formulae (2-1) to (2-5) tends to be larger than the distribution of magnitudes of the coefficients as to $e_5$ for w (estimation item 4).

Various assumed values for the composition parameters (x, y, z, v, w) are assigned to the formulae (2-1) to (2-5) to obtain assumed values for the relative emission parameters (X, Y, Z, V, W) corresponding to the assumed values, and when the assumed values for the relative emission parameters (X, Y, Z, V, W) become larger than the relative emission parameters (X, Y, Z, V, W) in Embodiment 5-K or the actually measured emissivity group $(X_K, Y_K, Z_K, V_K, W_K)$, the assumed values for the composition parameters (x, y, z, v, w) may be treated as the estimated values for the composition parameters (x, y, z, v, w) with which the emissivity is expected to improve.

Thus, as illustrated also in Fig. 19, the control means 108 estimates the estimated values $(x_1, y_1, z_1, v_1, w_1)$ to $(x_3, y_3, z_3, v_3, w_3)$ for the composition parameters (x, y, z, v, w), with which the emissivity pertaining to, for example, the following three types is expected to improve, as Embodiments 5-1 to 5-3 in sequence. All of the specific values for the relative emission parameters of Embodiments 5-1 to 5-3 are larger than the specific values (0.891, 0.786, 0.781, 0.784, 0.700) for the relative emission parameters pertaining to Embodiment 5-K. The number of types of the estimated values for the composition parameter may be 2 or less or 4 or more.

Embodiment 5-1: $(x_1, y_1, z_1, v_1, w_1)$ = (90, 2, 6, 0, 2)
Embodiment 5-2: $(x_2, y_2, z_2, v_2, w_2)$ = (90, 6, 2, 0, 2)

Embodiment 5-3: $(x_3, y_3, z_3, v_3, w_3) = (90, 4, 4, 0, 2)$

The estimated values for the relative emission parameters in these Embodiments 5-1 to 5-3 exceed the specific values for the relative emission parameters in Embodiment 5-K. Accordingly, the probability that the emissivity at each wavelength of interest in Embodiments 5-1 to 5-3 exceeds the emissivity at each wavelength of interest in Embodiment 5-K is sufficiently high.

Therefore, when the ceramic heat storage body 10 is manufactured with the composition in accordance with at least any one of the estimated values $(x_1, y_1, z_1, v_1, w_1)$ to $(x_3, y_3, z_3, v_3, w_3)$ for the composition parameters estimated in Embodiments 5-1 to 5-3 (manufacturing method using the composition estimating method), the probability of obtaining the ceramic heat storage body 10 having more excellent heat radiation performance than Embodiment 5-K is sufficiently high.

In order to actually confirm the heat radiation performance of Embodiments 5-1 to 5-3, respective ceramic heat storage bodies 10 were manufactured similarly to Embodiment 1 with the compositions in accordance with the estimated values $(x_1, y_1, z_1, v_1, w_1)$ to $(x_3, y_3, z_3, v_3, w_3)$ for the composition parameters, and the emissivity at each wavelength was actually measured. The measurement results are shown in Fig. 18 as described above.

According to Fig. 18, it was actually confirmed that emissivity distribution curves of Embodiments 5-1 to 5-3 are positioned on an upper side (on a larger side in the Y-axis) of an emissivity distribution curve of Embodiment 5-K, the emissivity of Embodiments 5-1 to 5-3 is larger than the emissivity of Embodiment 5-K at all the wavelengths of interest, and the radiation performance of Embodiments 5-1 to 5-3 exceeds that of Embodiment 5-K.

Note that confirmation of the emissivity in the ceramic heat storage body 10 manufactured with the composition in accordance with the specific values for the estimated composition parameter may be omitted. The condition for estimating a more satisfactory composition may be changed variously, for example, by changing such that the relative emission parameters concerning the specific values for the composition parameters exceed the relative emission parameters or the emissivity of the reference sample at a majority of wavelengths of interest.

Thus, pairs of the specific values for the composition parameters and the specific values for the emissivity in a plurality of samples are inputted, the relative emission parameters with the composition parameters as variables are calculated by multiple regression analysis, and the estimated values for the composition parameter are obtained so as to improve the obtained relative emission parameters. Consequently, a more satisfactory composition of the ceramic heat storage body 10 is found.

Note that even with a composition other than the composition pertaining to the above-described example, a more satisfactory composition of the ceramic heat storage body 10 can be found similarly. For example, in a state where at least one kind of additive substance remains, at least any one of four types of additive substances may be omitted. Alternatively, compounds other than the above-described four kinds may be substituted, or compounds other than the above-described four kinds may be added.

In Embodiments 5-1 to 5-3, the main component is alumina, the average absorbance at 1.7 $\mu$m to 2.7 $\mu$m, which is the center wavelength of radiant heat at 800°C to 1400°C is larger than 0.3, compounds other than alumina are contained in an amount of 1 weight% or more in compound equivalent, and the compounds include $Co_3O_4$, $Fe_3O_4$, and $MnO_2$. The $Co_3O_4$ is contained in an amount of 2 weight% or more and 6 weight% or less (2 weight%, 6 weight%, and 4 weight% in sequence in Embodiments 5-1 to 5-3), the $Fe_3O_4$ is contained in an amount of 2 weight% or more and 6 weight% or less (6 weight%, 2 weight%, and 4 weight% in sequence), and the $MnO_2$ is contained in an amount of 2 weight%.

Accordingly, the ceramic heat storage body 10 having even more excellent radiative properties is provided.

Embodiment 5 is the one that implements the manufacturing method of a ceramic heat storage body having Steps S1 to S4 for manufacturing the ceramic heat storage body 10 containing alumina as the main component and further containing one or more compounds other than alumina. The manufacturing method includes the sample data input accepting step S11, the objective function obtaining step S12, and the composition estimating step S13. The sample data input accepting step S11 is a step of accepting in the computer 101 the input about the correspondence relationships between the compositions $(x_A, y_A, z_A, v_A, w_A)$ to $(x_K, y_K, z_K, v_K, w_K)$ pertaining to at least any one of the amount of alumina and the types and amounts of the compounds and the emissivity groups $(X_A, Y_A, Z_A, V_A, W_A)$ to $(X_K, Y_K, Z_K, V_K, W_K)$ obtained for each sample by manufacturing the plurality of samples (Embodiments 5-A to 5-K) different from one another in at least any one of the amount of alumina and the types and amounts of the compounds and actually measuring each emissivity. The objective function obtaining step S12 is a step of obtaining the relative emission parameters $(X, Y, Z, V, W)$ as the objective functions with the composition $(x, y, z, v, w)$ as variables from the plurality of correspondence relationships between the input sample compositions $(x_A, y_A, z_A, v_A, w_A)$ to $(x_K, y_K, z_K, v_K, w_K)$ and the emissivity groups $(X_A, Y_A, Z_A, V_A, W_A)$ to $(X_K, Y_K, Z_K, V_K, W_K)$ by mathematical programming (multiple regression analysis) in the computer 101. The composition estimating step S13 is a step of estimating the estimated values $(x_1, y_1, z_1, v_1, w_1)$ to $(x_3, y_3, z_3, v_3, w_3)$ for the compositions with which the relative emission parameters $(X, Y, Z, V, W)$ exceed the relative emission parameters $(X, Y, Z, V, W)$ or the emissivity group $(X_K, Y_K, Z_K, V_K, W_K)$ of Embodiment 5-K by a computer. Then, with the estimated values $(x_1, y_1, z_1, v_1, w_1)$ to $(x_3, y_3, z_3, v_3, w_3)$ estimated for the composition, the injecting step S1 and subsequent steps are performed.

Accordingly, the manufacturing method that allows reasonably manufacturing the ceramic heat storage body 10 having even more excellent radiative properties by estimating the composition is provided.

Moreover, Embodiment 5 is the one that implements the composition estimating method of the ceramic heat storage body 10 for estimating the composition pertaining to the amount of alumina and the types and amounts of compounds in the ceramic heat storage body 10 containing alumina as the main component and further containing one or more compounds other than alumina. The composition estimating method includes the sample data input accepting step S11, the objective function obtaining step S12, and the composition estimating step S13. The sample data input accepting step S11 is a step of accepting in the computer 101 the input about the correspondence relationships between the compositions $(x_A, y_A, z_A, v_A, w_A)$ to $(x_K, y_K, z_K, v_K, w_K)$ pertaining to at least any one of the amount of alumina and the types and amounts of the compounds and the emissivity groups $(X_A, Y_A, Z_A, V_A, W_A)$ to $(X_K, Y_K, Z_K, V_K, W_K)$ obtained for each sample by manufacturing the plurality of samples (Embodiments 5-A to 5-K) different from one another in at least any one of the amount of alumina and the types and amounts of the compounds and actually measuring each emissivity. The objective function obtaining step S12 is a step of obtaining the relative emission parameters $(X, Y, Z, V, W)$ as the objective functions with the composition $(x, y, z, v, w)$ as variables from the plurality of correspondence relationships between the input sample compositions $(x_A, y_A, z_A, v_A, w_A)$ to $(x_K, y_K, z_K, v_K, w_K)$ and the emissivity groups $(X_A, Y_A, Z_A, V_A, W_A)$ to $(X_K, Y_K, Z_K, V_K, W_K)$ by mathematical programming (multiple regression analysis) in the computer 101. The composition estimating step S13 is a step of estimating the estimated values $(x_1, y_1, z_1, v_1, w_1)$ to $(x_3, y_3, z_3, v_3, w_3)$ for the compositions with which the relative emission parameters $(X, Y, Z, V, W)$ exceed the relative emission parameters $(X, Y, Z, V, W)$ or the emissivity group $(X_K, Y_K, Z_K, V_K, W_K)$ of Embodiment 5-K by a computer.

Accordingly, the composition estimating method that allows reasonably estimating the composition of the ceramic heat storage body 10 having even more excellent radiative properties and allows contributing to the manufacturing of the ceramic heat storage body 10 having even more excellent radiative properties is provided.

In addition to the above-described modification examples, Embodiment 5 appropriately has the modification examples in Embodiments 1 to 4.

DESCRIPTION OF REFERENCE SIGNS

10    Ceramic heat storage body
11    Shell
12    Hollow portion
20    Plaster mold (forming mold)

**Claims**

1. A ceramic heat storage body comprising alumina as a main component and having an average absorbance larger than 0.3 at 1.7 $\mu$m to 2.7 $\mu$m as a center wavelength of radiant heat at 800°C to 1400°C.

2. The ceramic heat storage body according to claim 1, comprising a compound other than alumina in an amount of 1 weight% or more in compound equivalent.

3. The ceramic heat storage body according to claim 2, wherein
   the compound contains at least one of Cr, Fe, Mn, Co, Ti, Ca, Zr, Hf, and Ta.

4. The ceramic heat storage body according to claim 2, wherein
   the compound is any one of a carbide, an oxide, and a nitride, or a mixture thereof.

5. The ceramic heat storage body according to any one of claims 1 to 4, comprising

   the ceramic heat storage body has a shell, and
   the shell has an outer surface in a shape of a spheroid including a sphere and internally has a hollow portion.

6. The ceramic heat storage body according to claim 5, wherein

when an average outer diameter of the shell is denoted by D and an average diameter of the hollow portion is denoted by *d*,

*d* is smaller than (D - 8) mm.

7. The ceramic heat storage body according to any one of claims 1 to 4, wherein

the ceramic heat storage body has a solid body, and
the solid body has an outer surface in a shape of a spheroid including a sphere and an average outer diameter of 13 mm or less.

8. The ceramic heat storage body according to claim 5, wherein
a center temperature of the hollow portion is higher than an inner surface temperature of the shell during heat storage.

9. The ceramic heat storage body according to claim 3, wherein

the compound contains $Co_3O_4$, $Fe_3O_4$, and $MnO_2$,
the $Co_3O_4$ is contained in an amount of 2 weight% or more and 6 weight% or less,
the $Fe_3O_4$ is contained in an amount of 2 weight% or more and 6 weight% or less, and
the $MnO_2$ is contained in an amount of 2 weight%.

10. A manufacturing method of a ceramic heat storage body, comprising:

an injecting step of injecting slurry containing ceramic powder and a dispersion medium into a forming mold having an outer surface shape of a shell without having an opening;
a forming step of obtaining a formed body including the shell and a hollow portion formed inside the shell by allowing the forming mold to absorb the dispersion medium;
a mold release step of releasing the formed body from the forming mold: and
a drying step of drying and then firing the released formed body to manufacture a ceramic heat storage body.

11. The manufacturing method of a ceramic heat storage body according to claim 10, wherein
a dimensional variation with respect to an average outer diameter of the shell is within ±1 mm.

12. The manufacturing method of a ceramic heat storage body according to claim 10 or 11 for manufacturing a ceramic heat storage body containing alumina as a main component and further containing one or more compounds other than alumina, the manufacturing method comprising:

a sample data input accepting step of accepting an input in a computer, the input being about a correspondence relationship between a composition and an emissivity, the composition pertaining to at least any one of an amount of the alumina and a type and an amount of the compound, the correspondence relationship being obtained for each of a plurality of samples different from one another in at least any one of the amount of the alumina and the type and the amount of the compound by manufacturing a plurality of the samples and actually measuring the emissivity of each sample;
an objective function obtaining step of obtaining a relative emission parameter as an objective function with the composition as a variable from the input plurality of correspondence relationships between the compositions and the emissivities for the samples in the computer by mathematical programming; and
a composition estimating step of estimating an estimated value for the composition having the relative emission parameter that exceeds a relative emission parameter of any one of the samples by the computer, wherein
the injecting step and subsequent steps are performed with the estimated value estimated for the composition.

13. A composition estimating method of a ceramic heat storage body in the ceramic heat storage body containing alumina as a main component and further containing one or more compounds other than alumina, the composition estimating method for estimating a composition pertaining to an amount of the alumina and a type and an amount of the compound, the composition estimating method comprising:

a sample data input accepting step of accepting an input in a computer, the input being about a correspondence relationship between the composition and an emissivity, the correspondence relationship being obtained for each of a plurality of samples different from one another in the composition by manufacturing the samples and actually measuring the emissivity of each sample;

an objective function obtaining step of obtaining a relative emission parameter as an objective function with the composition as a variable from the input plurality of correspondence relationships between the compositions and the emissivities for the samples in the computer by mathematical programming; and

a composition estimating step of estimating an estimated value for the composition having the relative emission parameter that exceeds a relative emission parameter of any one of the samples by the computer.

14. The composition estimating method of a ceramic heat storage body according to claim 13, wherein the mathematical programming is multiple regression analysis.

FIG.1

FIG.2

FIG.3(a)

SLURRY

20

25 23

21

24(24a, 24b)

22

FIG.3(b)

20

23

21

24(24a, 24b)

SLURRY

22

FIG.4

```
              ┌─────────────┐
              │    Start    │
              └──────┬──────┘
                     │
                     ▼
        ┌─────────────────────────┐
        │     Injecting step      │～S1
        └────────────┬────────────┘
                     │
                     ▼
        ┌─────────────────────────┐
        │      Forming step       │～S2
        └────────────┬────────────┘
                     │
                     ▼
        ┌─────────────────────────┐
        │    Mold release step    │～S3
        └────────────┬────────────┘
                     │
                     ▼
        ┌─────────────────────────┐
        │      Drying step        │～S4
        └────────────┬────────────┘
                     │
                     ▼
              ┌─────────────┐
              │     End     │
              └─────────────┘
```

FIG.5

| | Embodiment 1 | Comparative Example 1 |
|---|---|---|
| Weight (g) | 19.40 | 12.90 |
| Outer Diameter (mm) | 23.66 | 19.21 |
| Shell Thickness (mm) | 3.80 | |
| Density (g/cm$^3$) | 2.80 | 3.47 |

FIG.6(a)

FIG.6(b)

FIG.7

EP 4 342 959 A1

FIG.8

FIG.9

EP 4 342 959 A1

FIG.10

| | Breakdown of Compounds Contained in Additive Substance | | | | | | | | | | | | Total Addition Amount (Weight%) | Average Absorbance for Light at Wavelength 1.7 $\mu$m to 2.7 $\mu$m |
|---|---|---|---|---|---|---|---|---|---|---|---|---|---|---|
| | $Fe_2O_3$ | $Fe_3O_4$ | $TiO_2$ | CoO | CaO | $Cr_2O_3$ | $MnO_3$ | TiN | TiC | ZrC | HfC | TaC | | |
| Comparative Example 2-1 | – | – | – | – | – | – | – | – | – | – | – | – | 0 | 0.24 |
| Comparative Example 2-2 | 0.1 | – | – | – | – | – | – | – | – | – | – | – | 0.1 | 0.25 |
| Comparative Example 2-3 | 0.2 | 0.2 | 0.2 | 0.2 | – | – | – | – | – | – | – | – | 0.8 | 0.26 |
| Comparative Example 2-4 | 0.6 | 0.1 | – | – | – | 0.2 | – | – | – | – | – | – | 0.9 | 0.27 |
| Embodiment 2-1 | – | 2 | – | 2 | – | 2 | 2 | – | – | – | – | – | 8 | 0.80 |
| Embodiment 2-2 | – | 2 | – | – | 6 | – | – | – | – | – | – | – | 8 | 0.75 |
| Embodiment 2-3 | – | – | – | – | – | 4 | 3 | – | – | – | – | – | 7 | 0.67 |
| Embodiment 2-4 | – | – | – | 4 | – | 4 | – | – | – | – | – | – | 8 | 0.66 |
| Embodiment 2-5 | 2 | – | – | – | – | – | – | – | – | – | – | – | 2 | 0.56 |
| Embodiment 2-6 | – | – | – | 4 | – | – | 4 | – | – | – | – | – | 8 | 0.54 |
| Embodiment 2-7 | 3 | – | – | – | – | – | – | 3 | – | – | – | – | 6 | 0.54 |
| Embodiment 2-8 | – | – | – | – | – | – | – | – | 3 | – | – | – | 3 | 0.52 |
| Embodiment 2-9 | – | – | – | – | – | – | – | – | – | 3 | – | – | 3 | 0.45 |
| Embodiment 2-10 | – | – | – | – | – | – | – | – | – | – | 3 | – | 3 | 0.48 |
| Embodiment 2-11 | – | – | – | – | – | – | – | – | – | – | – | 3 | 3 | 0.46 |
| Embodiment 2-12 | – | – | – | – | – | – | – | – | – | – | 1 | – | 1 | 0.40 |

EP 4 342 959 A1

FIG.11(a)

FIG.11(b)

FIG.12

101

102
INPUT MEANS

103
OUTPUT MEANS

104
COMMUNICATION
MEANS

104
COMPOSITION
ESTIMATION
PROGRAM

P

108
CONTROL MEANS

FIG.13

```
           ┌──────────────────────────┐
           │          Start           │
           └──────────────────────────┘
                         │
                         │                        ⌐S11
  ┌──────────────────────────────────────────────┐
  │       Sample data input accepting step        │
  └──────────────────────────────────────────────┘
                         │
                         │                        ⌐S12
  ┌──────────────────────────────────────────────┐
  │         Objective function obtaining step      │
  └──────────────────────────────────────────────┘
                         │
                         │                        ⌐S13
  ┌──────────────────────────────────────────────┐
  │          Composition estimating step          │
  └──────────────────────────────────────────────┘
                         │
           ┌──────────────────────────┐
           │           End            │
           └──────────────────────────┘
```

FIG.14

| | Composition (Weight%) | | | | |
|---|---|---|---|---|---|
| Variable | x | y | z | v | w |
| Component | $Al_2O_3$ | $Co_3O_4$ | $Fe_3O_4$ | $Cr_2O_3$ | $MnO_2$ |
| Embodiment 5-A | 93.88 | 2.04 | 2.04 | 2.04 | 0.00 |
| Embodiment 5-B | 93.88 | 2.04 | 0.00 | 2.04 | 2.04 |
| Embodiment 5-C | 93.88 | 0.00 | 2.04 | 2.04 | 2.04 |
| Embodiment 5-D | 93.88 | 2.04 | 2.04 | 0.00 | 2.04 |
| Embodiment 5-E | 95.84 | 0.00 | 2.08 | 0.00 | 2.08 |
| Embodiment 5-F | 95.84 | 2.08 | 2.08 | 0.00 | 0.00 |
| Embodiment 5-G | 95.84 | 2.08 | 0.00 | 0.00 | 2.08 |
| Embodiment 5-H | 95.84 | 0.00 | 0.00 | 2.08 | 2.08 |
| Embodiment 5-I | 95.84 | 0.00 | 2.08 | 2.08 | 0.00 |
| Embodiment 5-J | 95.84 | 2.08 | 0.00 | 2.08 | 0.00 |
| Embodiment 5-K | 92.00 | 2.00 | 2.00 | 2.00 | 2.00 |
| Embodiment 5-1 | 90.00 | 2.00 | 6.00 | 0.00 | 2.00 |
| Embodiment 5-2 | 90.00 | 6.00 | 2.00 | 0.00 | 2.00 |
| Embodiment 5-3 | 90.00 | 4.00 | 4.00 | 0.00 | 2.00 |
| Comparative Example 5 | 100 | 0 | 0 | 0 | 0 |

FIG.15

EP 4 342 959 A1

FIG.16

EP 4 342 959 A1

FIG.17

EP 4 342 959 A1

FIG.18

EP 4 342 959 A1

## FIG.19

| | Variable | Component or Wavelength | Embodiment 5-K | Embodiment 5-1 | Embodiment 5-2 | Embodiment 5-3 |
|---|---|---|---|---|---|---|
| Composition Parameter | x | $Al_2O_3$ | 92 Weight% | 90 Weight% | 90 Weight% | 90 Weight% |
| | y | $Co_3O_4$ | 2 Weight% | 2 Weight% | 6 Weight% | 4 Weight% |
| | z | $Fe_3O_4$ | 2 Weight% | 6 Weight% | 2 Weight% | 4 Weight% |
| | v | $Cr_2O_3$ | 2 Weight% | 0 Weight% | 0 Weight% | 0 Weight% |
| | w | $MnO_2$ | 2 Weight% | 2 Weight% | 2 Weight% | 2 Weight% |
| Relative Emission Parameter | X | 1.65 $\mu$m | 0.891 | 0.949 | 1.157 | 1.053 |
| | Y | 1.8 $\mu$m | 0.786 | 1.162 | 1.006 | 1.084 |
| | Z | 2.1 $\mu$m | 0.781 | 1.069 | 0.893 | 0.981 |
| | V | 2.6 $\mu$m | 0.784 | 0.898 | 1.126 | 0.898 |
| | W | 3.1 $\mu$m | 0.700 | 1.122 | 1.082 | 1.102 |
| Multiple Regression Analysis Result | $X=-0.012x+0.064y+0.012z+0.007v+0.127w+1.575$ | | | | | |
| | $Y=-0.007x+0.053y+0.092z+0.003v+0.079w+0.976$ | | | | | |
| | $Z=-0.003x+0.054y+0.098z+0.055v+0.017w+0.609$ | | | | | |
| | $V=-0.004x+0.114y+0.038z+0.023v+0.045w+0.712$ | | | | | |
| | $W=-0.032x+0.059y+0.069z-0.041v+0.054w+3.362$ | | | | | |

EP 4 342 959 A1

## INTERNATIONAL SEARCH REPORT

| International application No. |
|---|
| **PCT/JP2022/025244** |

| A. | CLASSIFICATION OF SUBJECT MATTER |
|---|---|

*C09K 5/14*(2006.01)i; *C04B 35/117*(2006.01)i; *F28D 20/00*(2006.01)i
FI:   C09K5/14 E; C04B35/117; F28D20/00 A

According to International Patent Classification (IPC) or to both national classification and IPC

| B. | FIELDS SEARCHED |
|---|---|

Minimum documentation searched (classification system followed by classification symbols)

C09K5/14; C04B35/117; F28D20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 近藤　健斗　ほか, 第85回化学工学会年会研究発表講演要旨集, 2020, PA139 in particular, "1. Outline", non-official translation (KONDO, Kento et al. Lecture Abstracts of Research Presentation of SCEJ 85th Annual Meeting.) | 1, 5-6, 8 |
| Y | | 2-4, 9-14 |
| X | JP 2016-28993 A (DAINIPPON INK & CHEMICALS) 03 March 2016 (2016-03-03) paragraphs [0037]-[0045], [0060], fig. 1, 3 | 1-2, 4, 7 |
| X | JP 2015-230831 A (NEC CORP) 21 December 2015 (2015-12-21) paragraphs [0086]-[0088] | 1-4 |
| Y | | 2-4, 9 |
| Y | JP 2011-168420 A (KIKUSUI CHEMICAL INDUSTRIES CO LTD) 01 September 2011 (2011-09-01) paragraphs [0014]-[0017] | 2-4, 9 |
| Y | JP 5-238810 A (ONODA CEMENT CO LTD) 17 September 1993 (1993-09-17) paragraphs [0004]-[0005] | 2-4, 9 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 342 959 A1**

**INTERNATIONAL SEARCH REPORT**

International application No.

**PCT/JP2022/025244**

## C.    DOCUMENTS CONSIDERED TO BE RELEVANT

| Category* | Citation of document, with indication, where appropriate, of the relevant passages | Relevant to claim No. |
|---|---|---|
| Y | JP 4-224512 A (OLYMPUS OPTICAL CO LTD) 13 August 1992 (1992-08-13)<br>paragraph [0013], fig. 1 | 10-14 |
| Y | JP 1-222902 A (TOSHIBA CERAMICS CO LTD) 06 September 1989 (1989-09-06)<br>p. 2, lower right column, line 14 to p. 3, upper right column, line 6 | 10-14 |
| Y | JP 2001-141648 A (HIGETA SHOYU CO LTD) 25 May 2001 (2001-05-25)<br>paragraphs [0010]-[0012], [0019] | 12-14 |
| Y | JP 8-75641 A (ASAHI CHEM IND CO LTD) 22 March 1996 (1996-03-22)<br>paragraph [0005] | 12-14 |

Form PCT/ISA/210 (second sheet) (January 2015)

40

**INTERNATIONAL SEARCH REPORT**
Information on patent family members

International application No.

**PCT/JP2022/025244**

| Patent document cited in search report | | | Publication date (day/month/year) | Patent family member(s) | Publication date (day/month/year) |
|---|---|---|---|---|---|
| JP | 2016-28993 | A | 03 March 2016 | (Family: none) | |
| JP | 2015-230831 | A | 21 December 2015 | (Family: none) | |
| JP | 2011-168420 | A | 01 September 2011 | (Family: none) | |
| JP | 5-238810 | A | 17 September 1993 | (Family: none) | |
| JP | 4-224512 | A | 13 August 1992 | US 6350462 B1 column 6, line 40 to column 7, line 19, fig. 1 | |
| JP | 1-222902 | A | 06 September 1989 | (Family: none) | |
| JP | 2001-141648 | A | 25 May 2001 | (Family: none) | |
| JP | 8-75641 | A | 22 March 1996 | (Family: none) | |

Form PCT/ISA/210 (patent family annex) (January 2015)

**EP 4 342 959 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020070949 A